(19) Europäisches Patentamt
European Patent Office
Office européen des brevets

(11) **EP 4 510 050 A2**

(12) **EUROPEAN PATENT APPLICATION**

(43) Date of publication:
**19.02.2025 Bulletin 2025/08**

(21) Application number: **24199884.8**

(22) Date of filing: **10.03.2022**

(51) International Patent Classification (IPC):
**G06N 20/10** (2019.01)

(52) Cooperative Patent Classification (CPC):
**G06N 10/60; G06N 3/08; G06N 7/01; G06N 10/20;
G06N 20/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.03.2021 GB 202103338
09.03.2022 US 202217654225**

(62) Document number(s) of the earlier application(s) in
accordance with Art. 76 EPC:
**22161485.2 / 4 057 188**

(71) Applicant: **Quantinuum Ltd
London SW1P 1BX (GB)**

(72) Inventors:
• **COYLE, Brian**
**London, SW1A (GB)**

• **BENEDETTI, Marcello**
**London, SW1A (GB)**
• **FIORENTINI, Mattia**
**London, SW1A (GB)**
• **LUSBACH, Michael**
**London, SW1A (GB)**
• **ROSENKRANZ, Matthias**
**London, SW1A (GB)**

(74) Representative: **Jennings, Michael John
Venner Shipley LLP
200 Aldersgate
London EC1A 4HD (GB)**

Remarks:
This application was filed on 11-09-2024 as a
divisional application to the application mentioned
under INID code 62.

(54) **COMPUTER SYSTEM AND METHOD FOR UTILIZING VARIATIONAL INFERENCE**

(57) A computing system that includes a quantum computer, wherein the computing system is configured to use variational inference methods based on input data derived from an apparatus to be controlled, and to output data for controlling the operation of the apparatus. Methods for using the computing system for controlling operation of the apparatus. The computing system uses variational inference methods configured to drawing conclusion about unobserved variable given observations of related variables, to control the apparatus. The computing system may use Bayesian networks, quantum Born machines, adversarial objectives, or kernelized Stein discrepancy, to perform variational inference.

FIG. 10

## Description

Any and all applications for which a foreign or domestic priority claim is identified in the application documents filed with the present patent specification are hereby incorporated by reference.

BACKGROUND

Field of the Invention

The present disclosure relates to computer systems that include a hybrid combination of classical computers and quantum computers that mutually exchange data therebetween. More specifically, the present disclosure relates to computer systems and methods that are configured to receive input data from an apparatus and to use a model implemented at least in part on a quantum computer to process the input data to generate corresponding output data for use in controlling operation of the apparatus. Furthermore, the present disclosure relates to software products including executable code for causing a data processor to implement the aforesaid methods.

Description of the Related Art

Probabilistic graphical models can be used to describe dependencies of variables in complex systems, for example dependencies of random variables. Such models are capable of being used to perform two important tasks: learning and inference. Such learning yields a model that approximates observed data distributions of the complex systems. Moreover, inference uses the model to answer queries about unobserved variables given observations of other variables. Contemporarily, in general, exact inference is computationally intractable, so methods that can produce approximate solutions to queries using computing systems are desirable.

SUMMARY

According to a first aspect, there is provided a control system for controlling or monitoring a real physical system, wherein the control system includes a hybrid combination of a classical computer and a quantum computer, wherein the control system is configured to receive input data at the classical computer from the real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system, wherein the variational inference arrangement is implemented at least in part by using at least one Bayesian network model arrangement either on the classical computer or on the quantum computer, and a Born machine arrangement implemented using the quantum computer.

In some cases, the variational inference arrangement may comprise a Bayesian network model that may be inferred. In some cases, the Bayesian network model can be implemented using a classical computer. In some cases, the Bayesian network model can be a trained model. The variational inference arrangement may further comprise a Born machine. In some examples, the Born machine may be trained to perform inference on the Bayesian network model. In some implementations, the Born machine may comprise a quantum circuit (e.g., a parametrized quantum circuit) implemented on the quantum computer. In some cases, Bayesian network model and the Born machine may be implemented on the quantum computer.

The invention is of advantage in that use of the at least one model, namely at least one generative model, implemented using the Born machine arrangement implemented using the quantum computer is capable of providing an enhanced degree of inference and control accuracy in respect of the real physical system. Implementing the model using the Born machine arrangement implemented on the quantum computer may improve an accuracy of the control system, and allow the control system to infer an operating condition of the real physical system controlled or monitored by the control system.

Optionally, for the control system, the Born machine arrangement of the variational inference arrangement (e.g., used to perform inference on the at least one Bayesian network model arrangement), is configured to be taught by using an objective function for at least one of:

(i) minimizing a Kullback-Leibler (KL) divergence of a true posterior and relying on a classifier that estimated a probability ratio; and
(ii) teaching using a kernelized Stein discrepancy (KSD) requiring explicit priors and likelihoods.

Optionally, for the control system, the Bayesian network model arrangement includes a nested series of models, for example a nested series of hidden Markov models (HMMs).

Optionally, the control system is configured to infer an operating condition of the physical system from an error signal used to compensate for deviations in operation of the physical system relative to a learnt representation of the physical system, wherein the learnt representation of the physical system is implemented using the at least one Bayesian network model arrangement that is at implemented using either the classical computer or the quantum computer or a hybrid combination thereof.

In some cases, the classical computer is in communication with the quantum computer, and executes program instructions that are stored in a non-transitory memory of the quantum computing system. In some cases, the non-transitory memory can be a memory of the classical computer.

In some implementations, the control system may include at least one conventional classical computer (also referred to as classical computer or binary data computer) and at least one quantum computer in communication with the classical computer. In some cases, the classical computer may be in communication with the quantum computer. The classical computer may exchange data with the quantum computer via one or more data links or a data interface.

In some examples, the operation of the quantum computer may be controlled by the classical computer or a separate quantum computer controller (e.g., using an FPGA), based on computer executable instructions stored in a non-transitory memory of the classical computer or the quantum computer controller.

In some cases, the control system (e.g., the classical computer in the control system) may include at least one electronic processor (also referred to as hardware processor) and a non-transitory memory configured to store data and specific computer-executable instructions. The electronic processor may be in communication with the memory and may be configured to specific computer-executable instructions to perform at least a portion of computation and the computational and control tasks associated with receiving input data, processing the input data using the variational inference arrangement, and generating output data.

According to a second aspect, there is provided a method for (namely, method of) using a control system for controlling or monitoring a real physical system, wherein the method includes:

(i) arranging for the control system to include a hybrid combination of a classical computer and a quantum computer, wherein the control system is configured to receive input data at the classical computer from the real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system; and

(ii) using the variational inference arrangement implemented at least in part by using a Bayesian network model arrangement implemented using a Born machine arrangement implemented using the quantum computer to generate one or more inferences regarding an operating condition of the real physical system.

Optionally, the method includes arranging for the at least one Bayesian network model arrangement, for example implemented using a hidden Markov model arrangement, to include a nested series of models, wherein at least one of the series of models is implemented using the classical or quantum computer or both. In some examples, the at least one Bayesian network model arrangement, may be implemented using models different from hidden Markov models, for example explicitly defined models.

Optionally, the method includes configuring at least one Born machine model arrangement of the variational inference arrangement to be taught by using an objective function for at least one of:

(i) minimising a Kullback-Leibler (KL) divergence of a true posterior and relying on a classifier that estimated a probability ratio; and

(ii) teaching using a kernelized Stein discrepancy (KSD) requiring explicit priors and likelihoods.

Optionally, the method includes configuring the control system to infer an operating condition of the real physical system from an error signal used to compensate for deviations in operation of the real physical system relative to a learnt representation of the real physical system, wherein the learnt representation of the real physical system is implemented using the at least one Bayesian network model arrangement that is at least partially implemented using the quantum computer.

According to a third aspect, there is provided a software product, wherein the software product includes executable code for causing a data processor to implement the method of the second aspect.

In some cases, the method of the second aspect may be implemented, at least partially, by executing specific instructions stored in a machine-readable data storage medium that are executable on data processing hardware, using a data processing hardware.

BRIEF DESCRIPTION OF THE DRAWINGS

Examples implementing the system, method and computer program of the disclosure will be described with reference to the following diagrams, by way of example only, wherein:

FIGs. 1A-1D depict some applications of inference on Bayesian networks: (A) a 'Sprinkler network', (B) a regime switching time series, (C) 'a Lung cancer' network, (D) an Error correction network. Filled circle denotes observed random variables, whereas an empty circle denotes random variables.

FIG. 2 depicts probabilistic models used in methods of the present disclosure. The probabilistic models include a classical model that comprises a prior over unobserved discrete variables and a likelihood over observed variables. There is used a quantum model that approximates a posterior distribution of the unobserved variables given observed data.

FIG. 3 is a depiction of an adversarial variational inference achieved using a Born machine.

FIG. 4 depicts a kernelized Stein variational inference using a Born machine. There is thereby provided a method that minimizes a kernelized Stein discrepancy between approximate and true posterior distributions.

FIG. 5 depicts a hardware-efficient Ansatz for the Born machine arrangement used in experiments to verify implementations of the present disclosure. All rotations used, namely $R_x, R_z$ are parameterized by individual angles. A unitary $S(x)$ is used to encode values of x. Choosing $S(x)$ depends on use application. Corresponding classical random variables are indicated below a quantum circuit included in FIG. 5.

FIGs. 6A-6B depict total variation distances of approximate and true posteriors. A median of thirty instances for (A) KL and (A) KSD objective functions is shown for mutually different numbers of layers in the Ansatz. Each instance is a "sprinkler" Bayesian network, for example as shown in FIG. 1A wherein conditional probabilities are chosen at random.

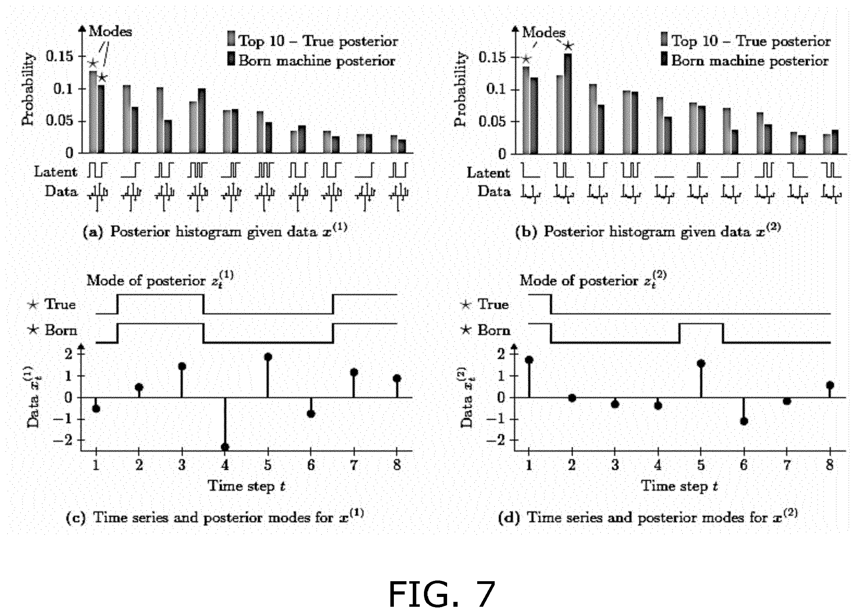

FIGs. 7A-7D depict truncated ordered histograms of the posteriors for two observed samples (A) $x^{(1)}$ and (B) $x^{(2)}$ of a hidden Markov model in Equations 15 to 16 (Eq. 15 to Eq. 16). The histograms are sorted by probability of the true posterior. Bars shown are probabilities of corresponding approximate posterior. A z-axis shown represent a latent state for each bar and a corresponding observed data point x. Lower panels depict a time series of the data (C) $x^{(1)}$ and (D) $x^{(2)}$, as well as corresponding modes of the true posterior and Born machine posterior as indicated with stars in an upper panel.

FIG. 8 depicts histograms of true versus learned *posteriors* with a simulated and hardware-trained Born machine for a "lung cancer" network shown in FIG. 1C. For generating the histograms, an *ibmq rome* quantum processor (whose connectivity is shown inset) was used. Conditions that pertain include $X$ = fa, $D$ = fa, and $I$ = tr. A configuration of observed $(X, D, I)$ and unobserved variable $(A, S, T, L, B)$ are shown along an x-axis corresponding to each probability, wherein filled circles = tr and empty circles = fa (note: fa = false, tr = true).

FIGs. 9A-9B depict example of successful (A) and unsuccessful (B) variational inference (VI) applied to a "sprinkler" Bayesian network is Dc. VA using a KL objective in combination with an adversarial method.

FIG. 10 is an illustration of a quantum computing arrangement including a combination of a classical computer and a quantum computer as used in implementations of the present disclosure, wherein the quantum computer hosts a Born machine that is configured to implement at least one model, for example at least one hidden Markov model (HMM).

FIG. 11 is an illustration of a control arrangement for controlling a real physical system, wherein the control arrangement includes a hidden Markov model of the real system, and wherein the hidden Markov model is hosted by the quantum computer of FIG. 10.

FIG. 12 is an illustration of an acyclic state graph of a hidden Markov model of a system, wherein nodes denote states of the system that can be assumed, wherein lines between the nodes denote state transitions and associated probabilities of transition occurring from one state to another.

FIG. 13 is a flow chart of steps of a method of the present disclosure.

FIG. 14 is another flow chart of steps of a method of the present disclosure.

DETAILED DESCRIPTION

The present disclosure relates to computer systems that include a hybrid combination of classical computers and quantum computers that mutually exchange data therebetween; for example, the computer systems are configured to receive input data from apparatus and to use variational inference implemented at least in part on the quantum computers to process the input data to generate corresponding output data from the classical computers for use in controlling operation of the apparatus; the computer systems are, for example, implemented as control systems. Moreover, the present disclosure relates to methods for using computer systems that include a hybrid combination of classical computers and quantum computers that mutually exchange data therebetween; for example, the methods include configuring the computer systems to receive input data from apparatus and using variational inference implemented at least in part on the quantum computers to process the input data to generate corresponding output data from the classical computers for use in controlling operation of the apparatus.

Probabilistic graphical models can be used to describe dependencies of variables in complex systems, for example dependencies of random variables. Examples of probabilistic graphical models include Bayesian networks and Markov networks, for example hidden Markov models (HMM). Such models are capable of being used to perform two important tasks: learning and inference. Such learning yields a model that approximates observed data distributions of the complex systems. Moreover, inference uses the model to answer queries about unobserved variables given observations of other variables. Contemporarily, in general, exact inference is computationally intractable, so producing approximate solutions to queries becomes a desired goal. Improving an accuracy of the approximate solutions is a technical problem that the present disclosure seeks to address.

Probabilistic graphical models may be used in applications where an inference is to be derived; for example, the use applications can include health care and medicine (e.g., triage and clinical diagnosis), biology, genetics and forensics, finance and fault diagnosis, question answering systems for troubleshooting and customer assistance, and the like. Other example applications include: optimal control of mechanical systems (e.g., robotic arms) whose state can be inferred via the use of positional sensors or cameras, and object tracking via cameras, radar, infrared and other electromagnetic wave sensors. Such applications have a crucial requirement for quantifying an uncertainty of conclusions inferred from the models. Quantifying the uncertainty is a technical problem. The technical problem is susceptible to being addressed by using a posterior distribution to quantify the uncertainty. Moreover, the posterior distribution can be used in downstream tasks such as determining a likeliest configuration of unobserved variables, which best explains observed data.

The approximate inference methods may broadly fall into two categories:

(i) Markov chain Monte Carlo (MCMC) methods; and
(ii) variational inference (VI) methods.

The MCMC methods produce samples from a true posterior distribution in an asymptotic limit. Conversely, VI methods are a machine learning technique which casts inference as an optimization problem over a parameterized family of probability distributions. A technical problem that the present disclosure seeks to address is how to improve these methods, for example in practical real-time control applications.

In some cases, MCMC methods may be implemented using quantum computing resources, e.g., by replacing standard MCMC with quantum annealing hardware when training some types of Bayesian networks and Markov networks. Despite initially promising empirical results, it has been found to be very difficult to show that using quantum computing resources is susceptible to providing any benefit. However, it has been considered that using gate-based quantum computers would be a more promising approach; there exist algorithms for implementing MCMC methods with proven asymptotic advantage, but they require error correction and other features that are not available in contemporary quantum computers.

Thus, an objective technical problem addressed in the present disclosure relates to providing an improved configuration of a quantum computer that uses variational inference (VI), for example to control an operation of an apparatus in a more optimal manner.

According to a first aspect, there is provided a control system for controlling or monitoring a real physical system, wherein the control system includes a hybrid combination of a classical computer and a quantum computer, wherein the control system is configured to receive input data at the classical computer from the real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system, wherein the variational inference arrangement is implemented at least in part by using at least one Bayesian network model arrangement either on the classical computer or on the quantum computer or both, and a Born machine arrangement implemented using the quantum computer.

According to a second aspect, there is provided a method of using a control system for controlling or monitoring a real physical system, wherein the method includes:

(i) arranging for the control system to include a hybrid combination of a classical computer and a quantum computer, wherein the control system is configured to receive input data at the classical computer from the real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system; and

(ii) using the variational inference arrangement implemented at least in part by using at least one generative Bayesian model arrangement, namely a generative model arrangement, implemented using a Born machine arrangement implemented using a parameterized quantum circuit in the quantum computer to generate one or more inferences regarding an operating condition of the real physical system.

According to a third aspect, there is provided software product, wherein the software product includes executable code for causing a data processor to implement the method of the second aspect.

The present disclosure is concerned with performing variational inference (VI) using a quantum computer, for example using a noisy intermediate scale quantum (NISQ) computer; beneficially, the VI is used in a situation for improving control of operation of a real physical system to enhance its operation, for example to provide better control accuracy, better energy efficiency, better operating performance, better operating efficiency, faster response, better safety of operation, and so forth. Implementations of the present disclosure benefit from improving inference that is achievable using classical probabilistic models by using quantum computer processing resources. For example, some implementations of the present disclosure use *"Born machines"* implemented via parameterized quantum circuits, wherein such machines are susceptible to function as quantum machine learning models that exhibit high expressivity. Moreover, some implementations of the present disclosure beneficially use gradient-based methods and amortization in their training phase of quantum generative models such as Born machines, as will be elucidated in greater detail below.

Some implementations of the present disclosure optionally use *unsupervised* learning methods; however, such unsupervised learning methods use considered complexity and learning theory arguments for distributions and quantum non-locality and contextuality. Moreover, implementations of the present disclosure use variational inference (VI), as aforementioned, that is applicable to real physical systems, for example for controlling complex manufacturing apparatus, robotics systems, self-drive vehicles and so forth. Results of the VI can be used at decision points in control algorithms that determine operation of the aforesaid real physical systems.

Next, in general overview, VI that is used in implementations of the present disclosure will be elucidated in greater detail. When developing a probabilistic model $p$ over some set of random variables $y$, the variables $y$ can be continuous or discrete, depending on situation. Moreover, there will be available *evidence* for some variables in the model $p$; these variables that are supported by evidence $X \subseteq Y$ are then observed, for example measured, namely fixed to values of the evidence, wherein it is convenient to use a vector notation x to denote a realization of these observed variable. It is assumed that $x \sim p(x)$, meaning that the probabilistic model $p$ is able to capture a distribution of observed data. In an event that it is desirable to infer a *posterior* distribution of unobserved variables of the model $p$, these are conveniently included in a set $\mathcal{Z} := Y\backslash X$. Denoting these unobserved data by a vector z, it is desirable to compute the posterior distribution $p(z|x)$, namely a conditional probability of $z$ given x. By definition, the conditional probability can be expressed in terms of a joint divided by a marginal, namely: $p(z|x) = p(x,z)/p(x)$. However, from the foregoing, it will be appreciated that the joint can be written as $p(x,z) = p(x|z)p(z)$. Conveniently, Bayes' theorem combines the two identities and yields a relationship: $p(z|x) = p(x|z)p(z)/p(x)$.

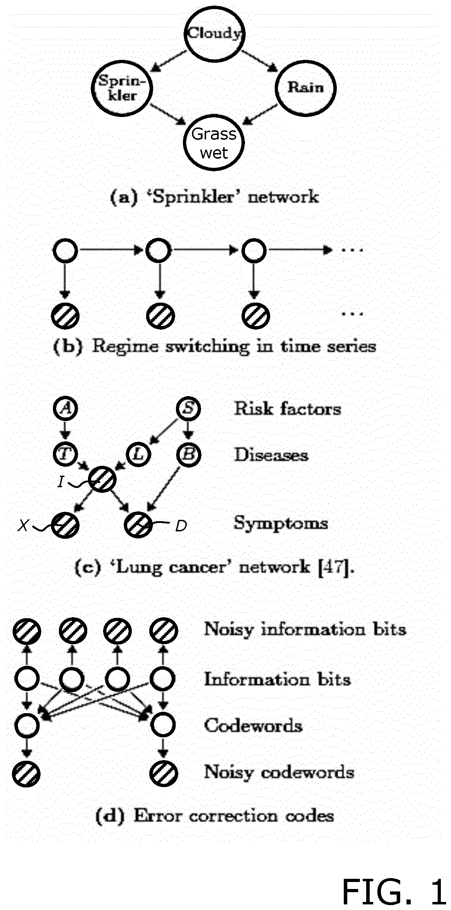

It will be appreciated that Bayesian networks are known to be targeted to solve inference problems and are beneficially used in implementations of the present disclosure. A Bayesian network describes a set of random variables with a clear conditional probability structure. This structure is a directed acyclic graph where conditional probabilities are modelled by explicit distributions, for example often modelled using tables, or by using neural networks. Referring to FIG 1A, there is provided a textbook example of a Bayesian network for a distribution of binary variables, wherein the variables include cloudy (C), sprinkler (S), rain (R) and grass being wet (W). According to a graph shown in FIG. 1A, there is derived a distribution that factorizes as P(C,S,R,W) = P(C)P(S|C)P(R|C)P(W|S,R). In respect of the directed acyclic graph, a given inferential question is: what is the probability distribution of the variables C, S and R given W = tr ? (note: tr = true). The probability can

be estimated by "inverting" the probabilities using Bayes' theorem, namely p(C, S, R|W = tr) = p(W = tr|C, S, R) p(C, S, R)/p(W).

In FIGs. 1B to 1Dd, there are shown additional use applications for utilizing inference derived from applying Bayesian networks. For example, in FIG. 1B, a hidden Markov model is illustrated by way of a joint probability distribution of a time series of asset returns and an unobserved "market regime", for example a booming economic regime vs. a recessive economic regime. An example application for using the present disclosure is to detect regime switches by observing asset returns, or to implement measures to keep a given power generation plant stable in operation. In FIG. 1C, there is shown a modified version of a "lung cancer" Bayesian network that can be used in apparatus that is configured to provide medical diagnosis when in use. The Bayesian network used is configured to encode expert knowledge about a relationship between risk factors, diseases and symptoms. It will be appreciated that, in health care, careful design of algorithms and Bayesian networks are critical in order to reduce biases when making inferences, for example in relation to health care access; moreover, it will be appreciated in relation to inference that medical diagnoses are often causal instead of associative. In FIG. 1C, there is shown a Bayesian network representation of turbo codes, which pertain to an error correction scheme used in 3G and 4G mobile communications as an example; the error correction scheme is configured to recover original information from information bits and codewords received over a noisy communication channel.

Contemporarily, it is found that inference is a computationally hard task to implement using classical (binary) computers, in all but simplest probabilistic models. Exact inference in Bayesian networks with discrete variables is #P-complete. Moreover, even approximate inference is non-deterministic polynomial-time hard (NP-hard); thus, unless some particular constraints are applied, such inference calculations are intractable using, for example, classical (binary) computers. Examples of the present disclosure seek to address such intractable calculations by using quantum computers. Conventionally, when tackling such inference computation using classical (binary) computers, there is performed a "forward pass" and unbiased samples are obtained from a joint $(x,z) \sim p(x,z) = p(x|z)p(z)$.

However, obtaining unbiased samples from a posterior $z \sim p(z|x) = p(x|z)p(x)$ is intractable due to an associated unknown normalization constant. However, in such a situation, it is feasible to implement MCMC sampling by constructing an ergodic Markov chain whose stationary distribution is a desired posterior. A problem with such ergodic Markov chains is that may converge slowly in practice. In contrast to ergodic Markov chains, variational inference (VI) is often faster in high dimensions but does not provide guarantees. Without such guarantees, it is therefore a technical risk to apply such VI methods to control systems where safety is a critical issue. It will be appreciated that VI is configured to optimize a variational distribution $q$ by minimizing its "distance" from a true posterior $p$.

In some implementations of the present disclosure, there is used a quantum Born machine arrangement as a candidate generator for variational distributions. Born machines are capable of functioning as highly expressive models that naturally represent discrete distributions as a result of quantum measurements. Additionally, the quantum Born machine arrangement is susceptible to being trained by gradient-based optimization.

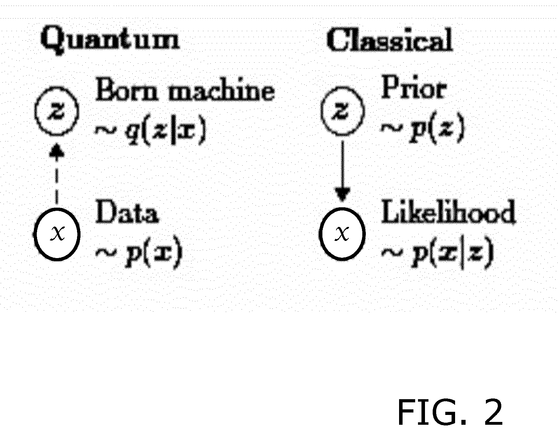

Examples of the present disclosure use an inherent probabilistic nature of quantum mechanics to model probability distributions of classical data in one or more simultaneous states within a quantum computer. When considering binary data $z \in \{0, 1\}^n$ where n is the number of variables in question, the Born machine is a normalized quantum state $|\psi(\theta)\rangle$ that is parameterized by $\theta$ which outputs n-bit strings with probabilities $q_\theta(z) = |\langle z|\psi(\theta)\rangle|^2$. Here, $|z\rangle$ represents computational basis states, wherein sampling the probabilities is implemented as a simple measurement in a quantum computer hosting the Born machines. Optionally, forms of discrete data can be processed by using suitable encoding. For example, when using amortization, a given variational distribution requires observed variables to be conditioned before being processed further. Optionally, in examples of the present disclosure, a parameter $x$ is used as an additional parameter in order to yield a pure state where output probabilities are $q_\theta(z|x) = |\langle z|\psi(\theta,x)\rangle|^2$. For example, in FIG. 2, there is shown an illustration of a relationship between a classical model for observed data and a quantum model for providing an approximate inference. In some cases, the classical model may comprise a *prior* over unobserved discrete variables and a likelihood over observed variables. The quantum model approximates a *posterior* distribution of the unobserved variables given observed data. Here it is assumed that the data distribution is the same as a marginal probability $p(x) = \Sigma_z p(x|z)p(z)$ from the classical model. In examples of the present disclosure, all distributions can be sampled efficiently provided that arrows are

followed, and a suitable computer is used, for example a quantum computer. In some cases, the marginal probability can be a probabilistic graphical model from a classical or quantum model.

It will be appreciated that Born machines are susceptible to being applied for benchmarking hybrid quantum-classical systems, generative modeling, finance, anomaly detection, and for demonstrating quantum advantage. These models can be realized in a variety of ways, in both classical and quantum computers. When the models are realized via certain classes of quantum circuits, they are classically intractable to simulate. A quantum computer cannot efficiently implement arbitrary quantum circuits, thus some Born machines are intractable even for a quantum computer. For example, instantaneous quantum poly-time (IQP) circuits are Born machines with O(poly(n)) parameters that yield classically intractable distributions in an average case under widely accepted complexity theoretic assumptions. Thus, quantum Born machines have expressive power that is larger than that of classical models, including neural networks and partially matrix product states. It can be shown that the model remains classically intractable throughout training, which is itself a form of quantum advantage. Before devising examples of the present disclosure, it has never hitherto been described how to perform variational inference using models having intractable likelihoods and discrete variables, such as Born Machines. Examples of the present invention seek to address a technical problem of intractable models.

In some examples of the present disclosure, it will be appreciated that a useful way to classify probabilistic models is as follows: *prescribed* models provide an explicit parametric specification of a given distribution, *implicit* models define only the data generation process. Moreover, it will be appreciated that Born machines can be effectively regarded as implicit models. Furthermore, it will be appreciated that it is feasible to obtain an unbiased sample provided that it is feasible to execute a corresponding circuit on a quantum computer and measure an associated computational basis; however, it requires exponential resources to estimate the distribution even on a quantum computer. It will be appreciated that there exist classes of Born machines for which a dependency between parameters and distribution is clear.

For example, when restricting a Born machine to an IQP circuit, amplitudes $\langle z|\psi(\theta)\rangle$ are proportional to partition functions of complex Ising models. Yet, estimating arbitrary amplitudes remains intractable.

It will be appreciated that implicit models are challenging to train by using standard methods. A major challenge is designing objective functions precisely because likelihoods are "prohibited". Valid objectives involve only statistical quantities (such as expectation values) than can be efficiently estimated from samples.

Examples of the present disclosure beneficially implement variational inference (VI) by using Born machines. Examples of the present disclosure are configured to implement inference methods that apply to classical graphical models and classical data; such methods are approximate, efficient and apply to graphical models, that are not Bayesian networks.

Next, operator variational inference (OPVI) will be described in greater detail. OPVI is a general method that uses mathematical operators to design objectives for an approximate posterior. Suitable operators to use in the OPVI are those for which:

(i) minima of the variation objective are attained at the true posterior; and
(ii) it is possible to estimate the objective without computing the true posterior. In general, an amortized OPVI objective is given by:

$$\mathbb{E}_{x \sim p(x)} \sup_{f \in \mathcal{F}} h \left( \mathbb{E}_{z \sim q(z|x)} \left[ (O^{p,q} f)(z) \right] \right)$$

Eq. (1)

wherein $f(\cdot) \in \mathbb{R}^d$ is a test function within a chosen family $\mathcal{F}$, and $O^{p,q}$ is an operator that depends on $p(z|x)$ and $q(z|x)$, and $h(\cdot) \in [0,\infty]$ yields a non-negative objective.

In some examples, there are two methods that are used that follow directly from two operator choices. The operator choices result in objectives based on the Kullback-Leibler (KL) divergence and the Stein discrepancy. The former utilizes an adversary to make a computation tractable, whereas in the latter, there arises tractability from computing a kernel function.

The KL divergence is an example of an f-divergence, while the Stein discrepancy is in a class of integral probability metrics, namely two fundamentally different families of probability distance measures. OPVI can therefore yield methods from these two difference families under a suitable choice of operator. However, these two families intersect non-trivially only at the total variation distance (TVD). It is this reason that TVD is used as a benchmark in implementations of the present disclosure.

Optionally, an objective function for VI used in implementations of the present disclosure is the Kullback-Leibler divergence (KL) of the true posterior relative to a corresponding approximate objective function; this is regarded as being an adversarial method. This objective function is obtainable from Eq. 1 by choosing $f$ and $h$ to be identity functions, and by choosing the operator $(O^{p,q} f)(z) = \log \frac{q(z|x)}{p(z|x)}$ :

$$\mathbb{E}_{x \sim p(x)} \underbrace{\mathbb{E}_{z \sim q_\theta(z|x)} \left[ \log \frac{q_\theta(z|x)}{p(z|x)} \right]}_{\text{KL}[q_\theta(z|x) \| p(z|x)]}$$

Eq. (2)

wherein $q_q$ is a variational distribution parameterized by $q$. The objective's minimum is zero and is attained by the true posterior $q_\theta(z|x) = p(z|x), \forall x$. By using a prior-contrastive approach, substituting Bayes' formula $p(z|x) = p(x|z)p(z)/p(x)$ into Eq. (2) provides:

$$\mathbb{E}_{x \sim p(x)} \mathbb{E}_{z \sim q_\theta(z|x)} \left[ \log \frac{q_\theta(z|x)}{p(z)} - \log p(x|z) \right] - \mathrm{H}[p(x)]$$

Eq. (3)

$$H[p(x)] \; := \; -\mathbb{E}_{x \sim p(x)}[\log p(x)]$$

wherein entropy is constant with respect to q and can be ignored. There is assumed an explicit conditional $p(x|z)$ that can be efficiently computed, for example when the observed x are "leaves" a Bayesian network.

In some implementations, there is beneficially used a Born machine to model a variational distribution $q_\theta(z|x) = |\langle z|\psi(\theta,x)\rangle|^2$. There is thereby provided an implicit model, wherein the ratio $q_\theta(z|x)/p(z)$ cannot be computed efficiently. Thus, implementations of the present disclosure are configured to make use of an adversarial method for estimating the aforesaid ratio approximately. It will be appreciated that the ratio can be estimated from an output of a binary classifier. Thus, ascribing samples $(z,x) \sim q_\theta(z|x)p(x)$ to a first class, and samples $(z,x) \sim p(z)p(x)$. to a second class, and defining a binary classifier $d_\phi$ parameterized by $\phi$ that outputs a probability $d_\phi(z,x)$ that the pair $(z,x)$ belongs to one of the two classes, there is derived $1 - d_\phi(z,x)$ that indicates a probability that $(z,x)$ belongs to the other class. However, it will be appreciated that there exist many possible choices of objective function for the classifier. It is convenient therefore to consider a cross entropy:

$$\mathcal{G}_{KL}(\phi;\theta) = \mathbb{E}_{x \sim p(x)}\mathbb{E}_{z \sim q_\theta(z|x)}\Big[\log d_\phi(z,x)\Big] + \mathbb{E}_{x \sim p(x)}\mathbb{E}_{z \sim p(z)}\Big[\log(1 - d_\phi(z,x))\Big]$$

Eq. (4)

wherein an optimal classifier that makes this equation Eq. (4) a maximum is given by:

$$d^*(z,x) = \frac{q_\theta(z|x)}{q_\theta(z|x) + p(z)}$$

Eq. (5)

Since the probabilities in Eq. (5) are unknown, the classifier must be trained on a dataset of samples. Such training does not pose a problem because samples from the Born machine $q_\theta(z|x)$ and prior $p(z)$ are easy to obtain by assumption. Once the classifier is trained, the logit transformation provides the log-odds of a data point coming the Born machine joint $q_\theta(z|x)p(x)$ vs the prior joint $p(z)p(x)$. The log-odds are approximations to the log-ration of the two distributions:

$$\mathrm{logit}(d_\phi(z,x)) \equiv \log \frac{d_\phi(z,x)}{1 - d_\phi(z,x)} \approx \log \frac{q_\theta(z|x)}{p(z)}$$

Eq. (6)

which is exact if $d_\phi$ is the optimal classifier in Eq. (5). However, it is desirable to avoid having to compute the problematic term in the KL divergence. Applying this result into Eq. (3) and ignoring constant terms, the final objective for the Born machine is:

$$\mathcal{L}_{KL}(\theta;\phi) = \mathbb{E}_{x \sim p(x)}\mathbb{E}_{z \sim q_\theta(z|x)}\Big[\mathrm{logit}(d_\phi(z,x)) - \log p(x|z)\Big].$$

Eq. (7)

The optimization can be performed in tandem as:

$$\max_\phi \mathcal{G}_{KL}(\phi;\theta)$$
$$\min_\theta \mathcal{L}_{KL}(\theta;\phi).$$

Eq. (8)

using gradient ascent and descent, respectively. It will be appreciated that the gradient of log $\frac{q_\theta(z|x)}{p(z)}$ with respect to q vanished. Thus, under the assumption of an optimal classifier $d_\phi$, the gradient of Eq. (7) is significantly simplified. The gradient of Eq. (8) is derived in

APPENDIX A.

A more intuitive interpretation of the procedure just described in the foregoing is as follows. The log-likelihood in Eq. (3) can be expanded as

$$\log p(x|z) = \log \frac{p(z|x)}{p(z)} + \log p(x)$$

wherein Eq. (3) can be rewritten as

$$\mathbb{E}_{x\sim p(x)}\mathbb{E}_{z\sim q_\theta(z|x)}[\log \frac{q_\theta(z|x)}{p(z)} - \log \frac{p(z|x)}{p(z)}]$$

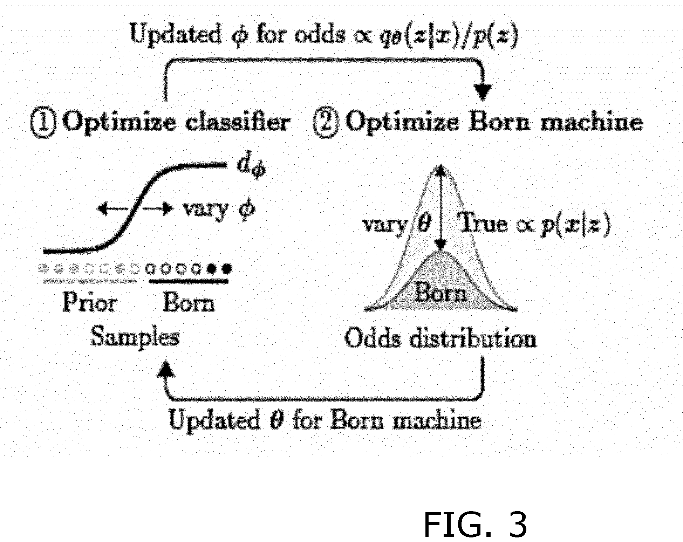

Comparing the expression in the square brackets with Eq. (6) reveals that the difference is between two log-odds, wherein the first difference is given by an optimal classifier for the approximate posterior and prior, and the second difference is given by a hypothetical classifier for the true posterior and prior. The adversarial method as used in examples of the present disclosure is illustrated in FIG. 3. FIG. 3 is an illustration of an adversarial variational inference achieved using a Born machine. In some cases, in a first step, a classifier df is optimized to output probabilities that a given observed sample comes from the Born machine rather than from a *prior.* In a second step of the inference, the Born machine $q_q$ is optimized to better match a true posterior. After the Born machine has been updated, it is fed back into the first step, and such a process of the first step and the second is repeated until a convergence of the Born machine occurs.

As an alternative to using the aforesaid adversarial method in examples of the present disclosure, an alternative kernelized method can be employed, as will next be described in greater detail.

Beneficially, another possible objective function for variational inference (VI) as used in examples of the present disclosure is the Stein discrepancy (SD) of the true posterior from the approximate one. The Stein discrepancy is obtained from Eq. (1) assuming that the image of *f* has the same dimension as z, choosing *h* to be the absolute value, and choosing $O^{p,q}$ to be a Stein operator. A Stein operator is independent from q and is characterized by having zero expectation under the true posterior of all functions *f* in the chosen family $\mathcal{F}$. Then, for binary variables, a possible Stein operator is $(O^p f)(z) = s_p(x,z)^T f(z) - \text{tr}(\Delta f(z))$ wherein:

$$(s_p(x,z))_i = 1 - \frac{p(x, \neg_i z)}{p(x, z)}$$

Eq. (9)

is the difference function, and

$$(\Delta f(z))_{ij} = (f(z))_j - (f(\neg_i z))_j$$

Eq. (10)

is the partial difference operator, and $\neg_i z$ flips the i-th bit in binary vector z. It is shown in APPENDIX B that this is a valid Stein operator for binary variables. Plugging these definitions in Eq. (1), there is obtained:

$$\underbrace{\mathbb{E}_{\boldsymbol{x} \sim p(\boldsymbol{x})} \sup_{f \in \mathcal{F}} \left| \mathbb{E}_{\boldsymbol{z} \sim q_{\theta}(\boldsymbol{z}|\boldsymbol{x})} \left[ s_p(\boldsymbol{x}, \boldsymbol{z})^T f(\boldsymbol{z}) - \mathrm{tr}(\Delta f(\boldsymbol{z})) \right] \right|}_{\mathrm{SD}[q_{\theta}(\boldsymbol{z}|\boldsymbol{x}) \| p(\boldsymbol{z}|\boldsymbol{x})]} \qquad \text{Eq. (11)}$$

At this point, it is feasible to parameterize the test function $f$ and obtain an adversarial objective that is similar to aforesaid examples of adversarial functions. However, by restricting the Hilbert space norm of $f$ to be at most 1, the supremum in Eq. (11) can be calculated in closed from a kernel. A result is thereby obtained that is the kernelized Stein discrepancy (KSD):

$$\mathrm{KSD}\left[q_{\theta}(\boldsymbol{z}|\boldsymbol{x}) \| p(\boldsymbol{z}|\boldsymbol{x})\right] = \sqrt{\mathbb{E}_{\boldsymbol{z},\boldsymbol{z}' \sim q_{\theta}(\boldsymbol{z}|\boldsymbol{x})}[\kappa_p(\boldsymbol{z},\boldsymbol{z}')]} \qquad \text{Eq. (12)}$$

wherein $k_p$ is the Stein kernel. For binary variables, Eq. (12) can be written as:

$$\kappa_p(\mathbf{z}, \mathbf{z}'|\mathbf{x}) = s_p(\mathbf{x}, \mathbf{z})^T k(\mathbf{z}, \mathbf{z}') s_p(\mathbf{x}, \mathbf{z}')$$
$$- s_p(\mathbf{x}, \mathbf{z})^T \Delta_{\mathbf{z}'} k(\mathbf{z}, \mathbf{z}') - \Delta_{\mathbf{z}} k(\mathbf{z}, \mathbf{z}')^T s_p(\mathbf{x}, \mathbf{z}')$$
$$+ \mathrm{tr}[\Delta_{\mathbf{z},\mathbf{z}'} k(\mathbf{z}, \mathbf{z}')]. \qquad (13)$$

$$\text{Eq. (13)}$$

The Stein kernel, $k$, depends on another kernel $k$. For $n$ unobserved Bernoulli variables, one possibility is the generic Hamming kernel $k(\boldsymbol{z}, \boldsymbol{z}') = \exp\left(-\frac{1}{n} \|\boldsymbol{z} - \boldsymbol{z}'\|_1\right)$. The KSD is a valid discrepancy measure if this "internal" kernel, k, is positive definite which is the case for the Hamming kernel. Thus, in summary, constraining $\|f\|_{\mathcal{H}}$ $\leq 1$ in Eq. (11) and substituting the KSD, there is thereby obtained:

$$\mathcal{L}_{\mathrm{KSD}}(\theta) = \mathbb{E}_{\mathbf{x} \sim p_{\mathcal{D}}(\mathbf{x})} \sqrt{\mathbb{E}_{\mathbf{z},\mathbf{z}' \sim q_{\theta}(\mathbf{z}|\mathbf{x})}[\kappa_p(\mathbf{z}, \mathbf{z}'|\mathbf{x})]} \qquad \text{Eq. (14)}$$

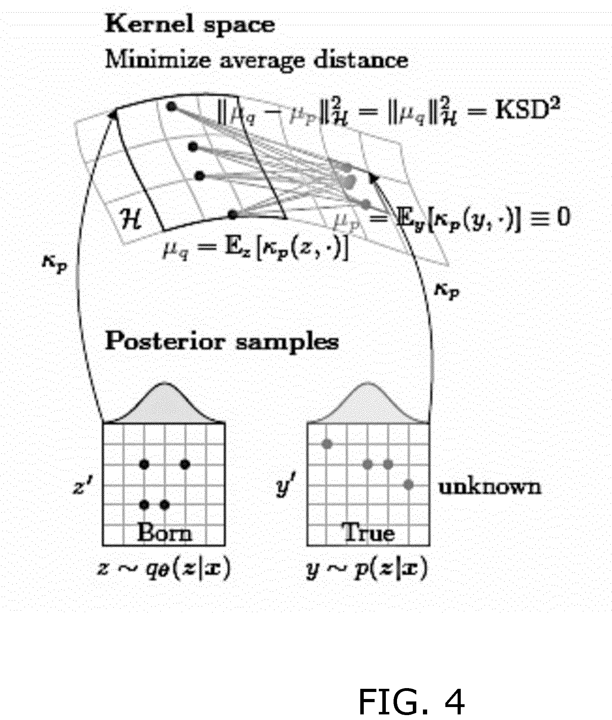

and the problem consists of finding $\min_\theta \mathcal{L}_{\mathrm{KSD}}(\theta)$. The gradient of Eq. (14) is derived in APPENDIX C. Moreover, the kernelized method is illustrated in FIG. 4. FIG. 4 depicts a kernelized Stein variational inference using a Born machine. There is thereby provided a method that minimizes a kernelized Stein discrepancy between approximate and true *posterior* distributions. Firstly, both distributions are embedded in a functional Hilbert space H. A map $k_p$ is designed to map elements from an unknown *true posterio* evaluated to zero. Secondly, a discrepancy is evaluated using samples from the Born machine $q_q(z|x)$ and optimized by gradient descent. In the kernelized Stein variational inference implemented using a Born machine, there is used a Step 1 for computing the Stein discrepancy (SD) between the Born machine and the true *posterior* using samples from the Born machine alone. By choosing a reproducing kernel Hilbert space H with kernel k, the kernelized Stein discrepancy (KSD) can be calculated in closed form. Alternatively or additionally, there is used a Step 2 that optimizes the Born machine arrangement to reduce the discrepancy, wherein the process repeats until convergence is achieved. The KSD is susceptible to being used for generative modeling with Born machines. In that context, the distribution $p$ is unknown, thus the inventors have derived methods to approximate the score $s_p$ from available data. Thus, variational inference (VI) is a suitable application for the KSD because in this context the joint $p(z,x)$ is known. The Stein kernel can be efficiently computed even if the joint is unnormalized, as normalization cancels in Eq. (9). Thus, the evaluation of the true *posterior* is avoided.

When developing implementations of the present disclosure, various experiments were performed to verify operation of the example implementations. Methods used in implementations of the present disclosure were validated using a canonical "sprinkler" Bayesian network. Moreover, the envisaged applications of the implementations encompass also regimes where there are continuous observed variables on a hidden Markov model (HMM), wherein multiple observations can be incorporated effectively via amortization. Furthermore, there is also considered a larger discrete model in a "lung cancer" Bayesian network for demonstrating the methods using a quantum computer, for example a quantum computer as hosted by IBM.

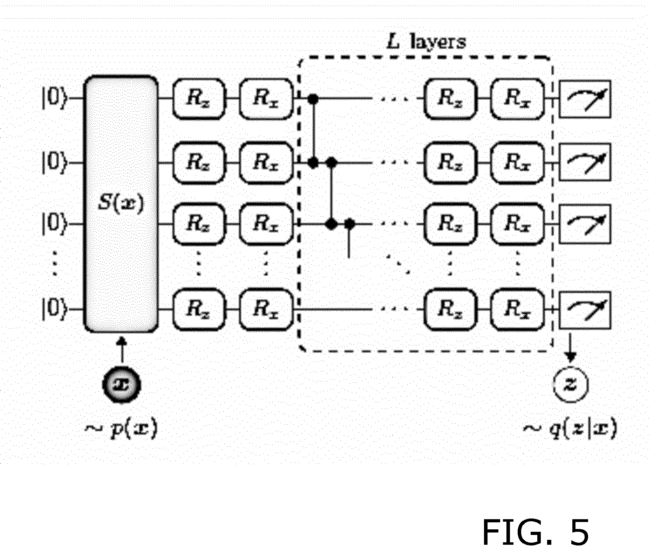

Implementations of the present disclosure can be verified for proof of principles for providing a "sprinkler" Bayesian network. For classically simulating a method of the disclosure on the "sprinkler" network of FIG. 1A, there is randomly generated entries of each probability table from a uniform distribution $\mathcal{U}$ ([0.01,0.99]) for producing a total of 30 instances of this network. For each instance, there is conditioned on "Grass et" being true which means the empirical data distribution becomes $p(W) = \delta(W = \text{tr})$. A posterior of the remaining variables is inferred using a Born machine implemented using 3 qubits and with the hardware-efficient Ansatz shown in FIG. 5. A layer of Hadamard-efficient gates is used as a state preparation, $S(x) = H \otimes H \otimes H$, wherein all parameters are initialized to $\approx 0$. Such an approach ensures that the initial distribution is approximately uniform over all bit-strings and no assumptions are made. However, such hardware-efficient Ansätze, while simple, have been shown to be vulnerable to barren plateaus, or regions of exponentially vanishing gradient magnitudes which makes training untenable. Alternatively, Ansätze that have been shown to be somewhat "immune" to the phenomenon of barren plateaus could optionally be used.

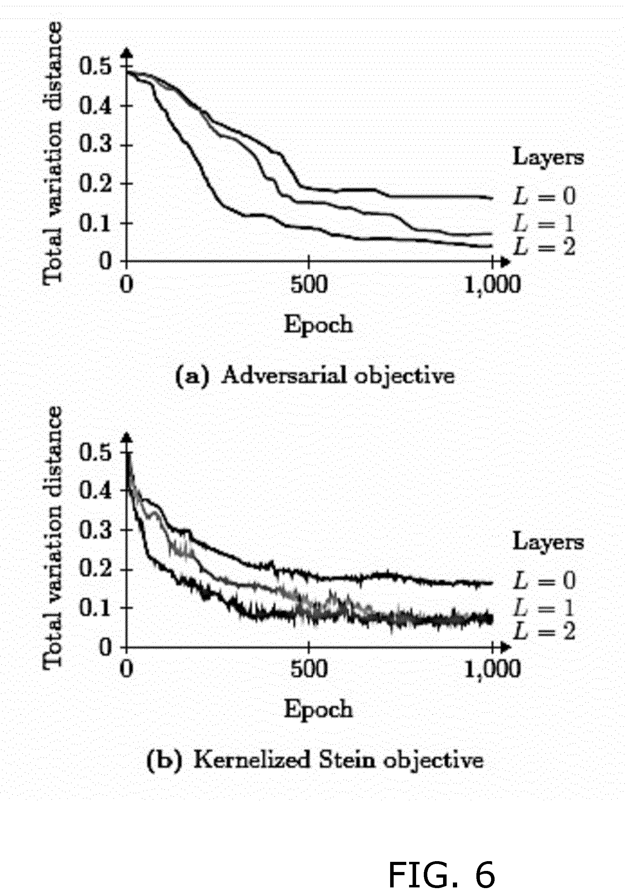

Beneficially, for example, for the KL objective, there is beneficially utilized a multi-layer perception (MLP) classifier comprising 3 input units, 6 ReLU hidden units and 1 sigmoid output unit; however, it will be appreciated that other numbers of input units, ReLU hidden units and sigmoid output units are optionally utilized; however, it will be appreciated that other numbers of input units, ReLU hidden units and sigmoid output units can be optionally used. Moreover, beneficially, the classifier is trained with a dataset of 100 samples from a *prior* p(C, R, S) and 100 samples from a Born machine q(C, R, S|W = tr). There beneficially use stochastic gradient descent with batches of size 10 and a learning rate of 0.03. For the KSD objective, there is beneficially used a Hamming kernel of a type as aforementioned. For both the KL objective and the KSD objective, there is computed a total variation distance (TVD) of true and approximate posterior at each epoch. However, TVD cannot be efficiently computed in general and can be shown only for small examples. FIGs. 6A and 6B are illustration of a median TVD out of the 30 instances for 1000 epochs of training for the KL and KSD objectives, respectively. For both KL and KSD objectives, the Born machine is trained using 100 samples to estimate each expectation value for the gradients, and using a vanilla gradient descent with a small learning rate of 0.003. A 0-layers Born machine generates unentangled states and it can be thought of as a classical mean-field approximation. Increasing the number of layers leads to better approximations to the posterior in all cases. Qualitatively, KL tends to converge to slightly better approximate posterior, but requires more memory and computation than KSD; this better approximation arises because of the MLP classifier being trained along the Born machine. Additional results are provided in APPENDIX E to supplement FIG. 6A-6B.

Next, continuous observed variables and amortization with a hidden Markov model will be described.

When using the adversarial variational inference (VI) method in a hidden Markov model (HMM) in the example shown in FIG. 1B, features of continuous observed variables and amortization may become noticeable. With HMM set up for T = 8 time steps (white circles in FIG. 1B), each represented by a Bernoulli latent variable with conditional dependency:

$$z_1 \sim \mathcal{B}\left(\tfrac{1}{2}\right),$$
$$z_t \sim \begin{cases} \mathcal{B}\left(\tfrac{1}{3}\right) & \text{if } z_{t-1} = 0 \\ \mathcal{B}\left(\tfrac{2}{3}\right) & \text{if } z_{t-1} = 1 \end{cases}$$

$$\text{Eq. (15)}$$

These represent an unknown "regime" at a time t. The regime affects how the observable data is generated. There are used Gaussian observed variables (filled circles in FIG. 1B) whose mean and standard deviations depend on the latent variables as:

$$x_t \sim \begin{cases} \mathcal{N}(0, 1) & \text{if } z_t = 0 \\ \mathcal{N}\left(1, \tfrac{1}{2}\right) & \text{if } z_t = 1 \end{cases}$$

$$\text{Eq. (16)}$$

Beneficially, when two time series observations $x^{(1)}$, $x^{(2)}$ are sampled from the HMM, the sampled observations can be used as an empirical data distribution. These time series are illustrated in FIGs. 7A-7D. FIGs. 7A-7D depict truncated ordered histograms of the *posteriors* for two observed samples (A) $x^{(1)}$ and (B) $x^{(2)}$ of a hidden Markov model in Equations 15 to 16 (Eq. 15 to Eq. 16). The histograms are sorted by probability of the true *posterior*. Bars shown are probabilities of corresponding approximate posterior. A z-axis shown represent a latent state for each bar and a corresponding observed data point x. Lower panels depict a time series of the data (C) $x^{(1)}$ and (D) $x^{(2)}$, as well as

corresponding modes of the true posterior and Born machine posterior as indicated with stars in an upper panel.

Instead of fitting two approximate *posteriors* separately, there is beneficially used a single Born machine with amortization $|\psi(\theta,x)\rangle$. There is used the Ansatz in FIG. 5 for 8 qubits with a state preparation layer

$$S(\boldsymbol{x}) = \otimes_{t=1}^{8} R_x(x_t)$$

. Parameters q are initialized to small values at random. Beneficially, the KL objective and a MLP classifier with 16 inputs, 24 ReLU, and 1 sigmoid units are used, wherein the system is trained for 3000 epochs. Learning rates are set to be 0.006 for the Born machine and 0.03 for the MLP, respectively. In tests, the Born machine used 100 samples to estimate each distribution with mini-batches of size 10.

Histograms included in FIGs. 7A-7D depict 10 most probable configurations of latent variables for the true posterior along with probabilities assigned by the Born machine. Conditioning on a data point $x^{(1)}$, the inferred most likely explanation is $|01100011\rangle$, namely the mode of the Born machine corresponding to a true posterior mode. For a data point $x^{(2)}$, the inferred mode was $|10001000\rangle$, which differs from the true posterior mode $|10000000\rangle$ by a single bit. Thus, in this example, regime switching has therefore been modeled with a high accuracy.

Rather than focusing on the mode, it is feasible to make use of the whole distribution to estimate some quantity of interest. Such use of the whole distribution is achieved by taking samples from the Born machine and using them in a Monte Carlo estimate. For example, it is feasible to predict an expected value of a next latent variable $z+1$ given available observations. For a datapoint $x^{(1)}$, making such a prediction entails computing an estimation of:

$$\mathbb{E}_{z_T \sim q_\theta(z_T | \boldsymbol{x}^{(1)})} \mathbb{E}_{z_{T+1} \sim p(z_{T+1} | z_T)} \left[ z_{T+1} \right] \qquad \text{Eq. (17)}$$

Next, use of IBMQ with the aforesaid "lung cancer" Bayesian network will be described. The lung cancer network (also referred to as an "Asia" network) is an example of a medical diagnosis Bayesian network, as illustrated in FIG. 1C. This network was chosen to test implementations of the present disclosure. This network was chosen, because it is small enough to fit without adaptations on many quantum devices, for example the 5 qubit ibmq_rome quantum processor, accessed via using PyQuil and tket. The network has 8 possible nodes, namely two "symptoms", whether a patient presented with dyspnoea (D) (shortness of breath), or had a positive X-ray reading (X), wherein:

(i) four possible "diseases" are potentially causing the symptoms, namely bronchitis (B), tuberculosis (T), lung cancer (L), or an "illness" (I) (which could be either tuberculosis or lung cancer or something other than bronchitis), and
(ii) two possible "risk factors" whether the patient had traveled to Asia (A), or whether the patient had a history of smoking (S).

Based on the graph structure in FIG. 1C, the distribution over the variables $p(A, T, S, L, I, X, B, D)$ can be factorized as:

$$p(A)p(T|A)p(X|I)p(I|T, L)p(D|B, I)p(B|S)p(L|S)p(S) \qquad \text{Eq. (18)}$$

In APPENDIX D, there is referred to an explicit probability table (Table I) for completeness. Modifying an illustrative example of a potential "real-world" use case in [47], a given patient potentially present in a clinic with an "illness" (I = tr) but no shortness of breath (D = fa) as a symptom. Furthermore, an X-ray reveals a negative result (X=fa). However, there is no patient history available and there is no knowledge available regarding which underlying disease is actually present. Beneficially, there is conditioned on having observed "evidence" variables, namely $x: X, D$ and I. The remaining five are the latent variables, z, so there are required 5 qubits to perform the computation.

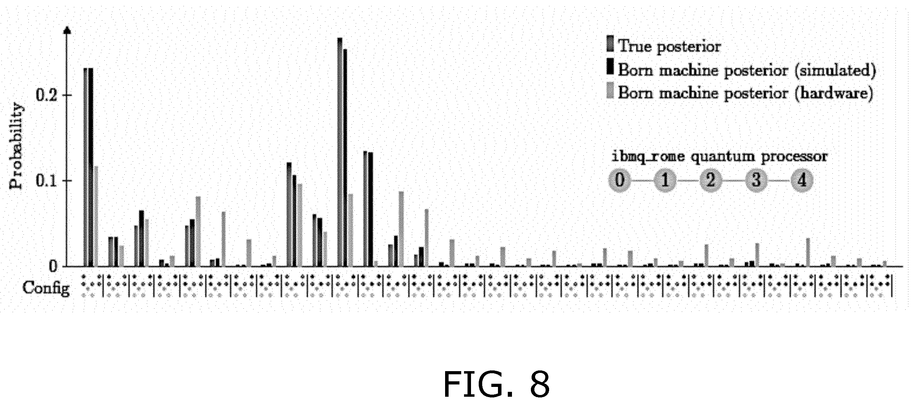

FIG. 8 depicts histograms of true versus learned *posteriors* with a simulated and hardware-trained Born machine for a "lung cancer" network shown in FIG. 1C. For generating the histograms, an *ibmq rome* quantum processor (whose connectivity is shown inset) was used. Conditions that pertain include $X$ = fa, $D$ = fa, and $I$ = tr. A configuration of observed *(A, D, I)* and unobserved variable *(A, S, T, L, B)* are shown along an x-axis corresponding to each probability, wherein filled circles = tr and empty circles = fa (note: fa = false, tr = true). In FIG. 8, there are illustrated results when using the aforesaid 5 qubit ibmq_rome quantum processor. Such a topology is convenient since it introduces no major overheads when compiling from the Ansatz illustrated in FIG. 5. In FIG. 5, there is plotted the true *posterior* versus the one learned by the Born machine, wherein both are simulated, and on the quantum processor using the best parameters found (after circa 400 epochs simulated and circa 50 epochs on the processor). For training in both cases, there is used a mutually same classifier with 5 inputs and 10 ReLU hidden units using the KL objective, which are observed to give best results. There are used a two-layer Ansatz in FIG. 5 *(L = 2)*, and 1024 shots are taken from the Born machine in all cases. It is observed that the simulated Born machine used is able to learn the true *posterior* very well with these parameters, but a performance that is achievable using real hardware tends to be less than ideal; however, the trained hardware model is successfully able to pick out three of four highest probability configurations of the network (shown in the abscissa x-axis of FIG. 8).

From the foregoing, it will be appreciated that two variational inference (VI) methods as described in the foregoing are susceptible to being used in implementations of the present disclosure. By implementing the VI methods using a Born machine hosted on a quantum computer, highly expressive posteriors can be given by quantum models, for example using hidden Markov models (HMM).

The first VI method is based on minimizing the Kullback-Leibler (KL) divergence of the true posterior and relies on a classifier that estimates probability ratio; the resulting adversarial training may be challenging due to there being a large number of hyper-parameters and stability issues. Conversely, the first method requires an ability to (i) sample from the prior $p(z)$, (ii) sample from the Born machine $q_q(z|x)$, and (iii) calculate the likelihood p(x|z). It is feasible to apply the method even when the *prior* is implicit (for example, as in a quantum-assisted Helmholtz machine).

The second VI method is based on a kernelized Stein discrepancy (KSD). However, a limitation of the second method is that it requires explicit *priors* and likelihoods. Advantageously, the second method provides plenty of flexibility in the choice of kernel. Beneficially, a generic Hamming kernel is used to compute similarities between bit-strings.

In the first and second methods used in implementations of the present disclosure, the *posterior* is approximated by using traced out additional qubits. Such a solution allows trading a larger number of qubits for reduced circuit depth for a given constant expressivity of the hidden Markov model used.

Next, some practical example implementations of the present disclosure will be described, starting from first principles.

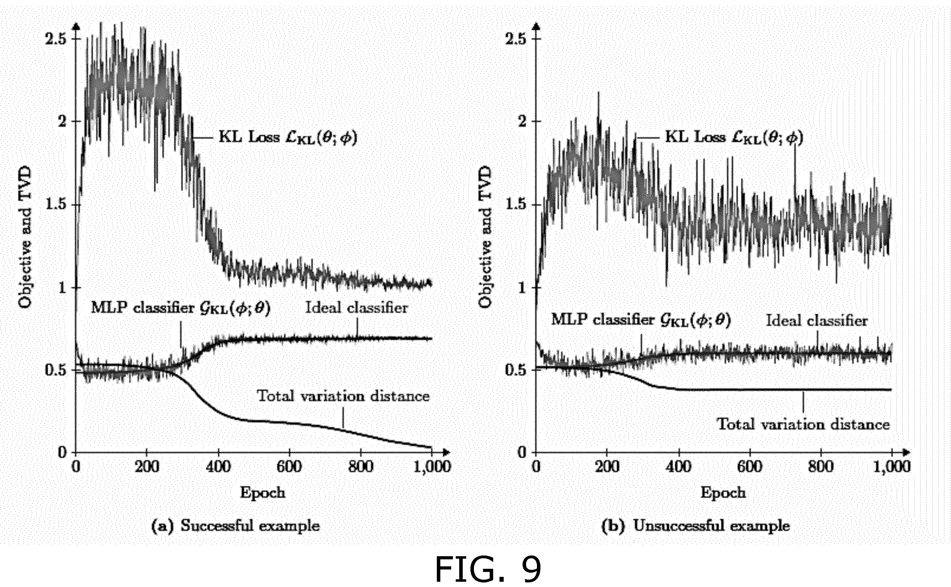

FIGs. 9A-9B depict examples of successful (A) and unsuccessful (B) variational inference (VI) applied to a "sprinkler" Bayesian network that is Dc. VA using a KL objective in combination with an adversarial method.

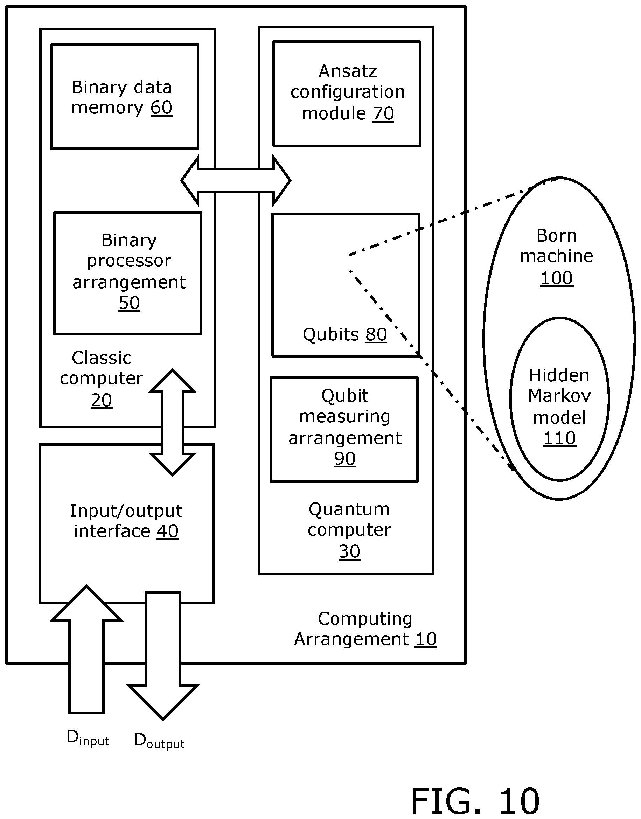

Referring to FIG. 10, there is shown an illustration of a quantum computing arrangement **10,** namely apparatus, that is used when implementing the present disclosure. In some implementations, a control system configured to control or monitor a real physical system, may comprise the quantum computing arrangement **10**. In some such implementations, the control system may execute a variational inference arrangement using the computing arrangement **10** to generate output data $D_{output}$ by processing input (external) data $D_{input}$.

In some implementations, The quantum computing arrangement **10** may include at least one classical (binary) computer **20** coupled in combination with at least one quantum computer **30.** Optionally, the classical (binary) computer **20** and the quantum computer **30** are spatially co-located. Alternatively, optionally, the classical (binary) computer **20** and the quantum computer **30** are spatial mutually remote but are coupled together via a data communication network, for example a wireless network, the Internet, for example as in Internet of Things ("IoT") when examples of the present disclosure are implemented as a distributed interconnected array of IoT devices. The classical computer **20** may include a binary data memory **60** and a processing arrangement **50,** for example an array of electronic processors. The classical computer **20** is coupled to an input/output interface **40** that is configured to receive external data $D_{input}$ and also to output data $D_{output}$.

In some example implementations, the quantum computer **30** may include an Ansatz configuration module **70,** an array of qubits **80,** and a qubits measuring arrangement **90**. In operation, the Ansatz configuration module **70** is used to configure initial values (or initial quantum state) of the qubits **80**. In some cases, the quantum computer **30** may comprise one or more quantum gates configured to operate on the array of qubits (e.g., to transform an initial quantum state of one or more qubit in the qubit array to a final quantum state). Moreover, the Ansatz configuration module **70** also configures circuits of quantum gates to operate on the qubits **80**. The qubit measuring arrangement **90** is used to measure values of the qubits **80** when the aforesaid quantum circuit (akin to a temporal algorithm executed on the qubits **80)** has been executed on the qubits **80**. In some cases, a number of quantum operations performed by quantum circuit and/or the longest path in the quantum circuit may be referred to as the depth of the quantum circuit. In some cases, a path in the quantum circuit may comprise a sequence of quantum operations performed to transform the initial quantum states to the final quantum states. The quantum circuit has a finite depth on account of quantum noise arising in the qubits 80 that ultimately would result in decoherence of the qubits **80.**

In some examples, one or more Born machines may be implemented using the qubits and/or the quantum circuits, wherein the Born machines **100** are used to implement one or more models **110.** In some cases, the one or more models may comprise one or more hidden Markov models (HMMs). In some cases, the one or more models may be associated with one or more hidden Markov models (HMMs). As will be described in more detail below, the one or more models **110** can be configured in layers, namely in a "nested" configuration. Moreover, in some cases, the classical computer **20** may be configured to compute one or more hidden Markov models of the aforesaid one or more hidden Markov models (HMMs) implemented using the quantum computer **30**. In various implementations, the quantum computer **30** can be implemented using cryogenically cooled Josephson junctions, ion traps, quantum photonics devices (e.g., integrated and on-chip quantum photonic devices), but not limited thereto. In some cases, the classic computer **20** may be integrated with the quantum computer **30** on a single platform. For example, the classic computer **20** may be implemented using conventional integrated circuits (e.g., silicon based integrated circuits) and the quantum computer can be implements using integrated photonic circuits (e.g., based on silicon photonic platforms). Moreover, the quantum computer **30** beneficially includes in a range of 10 to 500 qubits, optionally in a range of 50 to 500 qubits.

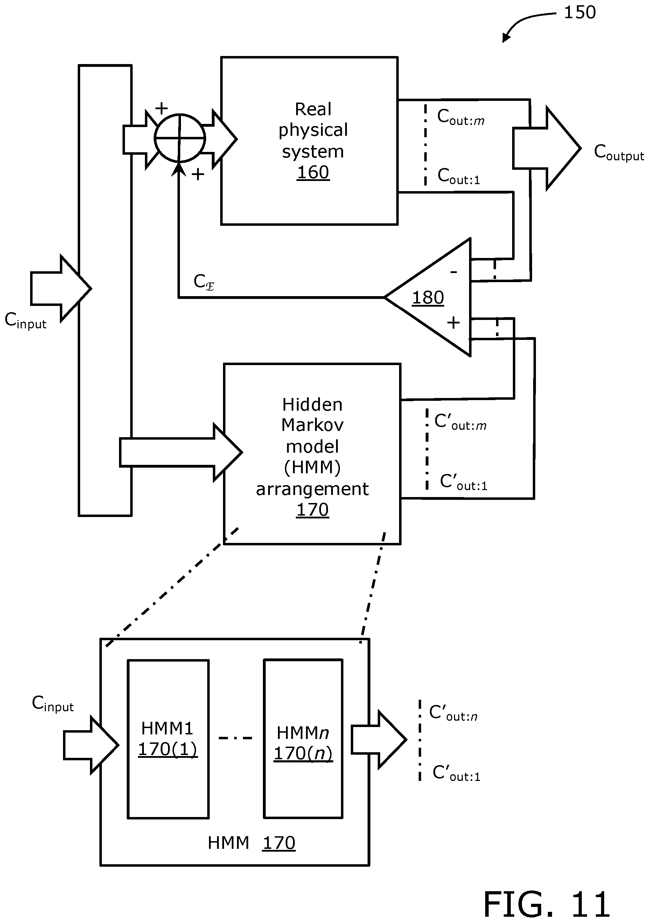

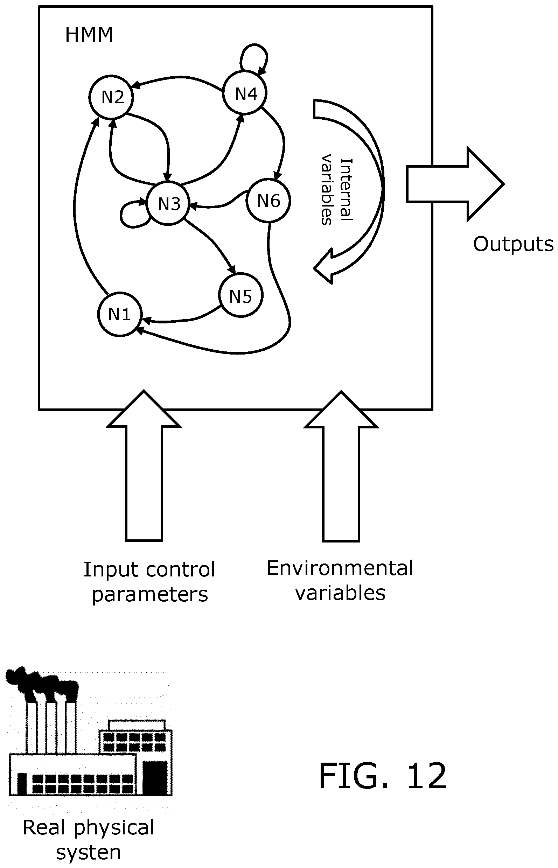

Referring next to FIG. 12, for those unfamiliar with Bayesian models, for example hidden Markov models, a given real physical system **160** (in FIG. 11 and FIG. 12), can be modeled using a corresponding hidden Markov model (HMM) **120** wherein physical operating states of the real physical system **160** (e.g., a factory facility) are represented by nodes, for example nodes N1 to N6 in the HMM. Moreover, transitions that occur between the physical operating states in the real physical system are represented by arrows linking the nodes in the hidden Markov model. Input parameters that control the real physical system are represented by input control parameters **122** in the hidden Markov model. Moreover, environmental parameters **124** that affect operation of the real physical system, for example temperature, availability of raw materials, energy availability, are also input as data (*a priori*) into the hidden Markov model **120.** Physical outputs from the real physical system, for example produced materials, output power, sensor signals of sensors distributed in the real physical system **160,** and so forth are represented as outputs (*a posteriori)* from the hidden Markov model. It will be appreciated that the hidden Markov model **120** optionally has internal variables that exist only within the model. Each of the arrows has associated therewith a probability that there will be a transition from one given state to another state as a function of one or more of; the outputs, the input control parameters, the environmental variables, the internal variables, a temporal history of previous states assumed by the hidden Markov model. The graph shown in FIG. 12 (in HMM **120)** can be considered to be a form of acyclic graph.

As described above, FIG. 12 provides a representation of a hidden Markov model (HMM) **120** with nodes and links between the nodes that define the state transitions and probability of the state transitions occurring. In some cases, the HMM **120** can be implemented , at least partially, using a quantum computer (e.g., the quantum computer **30).** In some such cases, the nodes and state transitions (e.g., N1 to N6 and the corresponding links), may be implemented in at least one quantum circuit of the quantum computer **30,** wherein qubits of the at least one quantum circuit can be configured to represent the nodes and superposition and/or entanglement between the qubits can be used to denote the state transitions as defined by gates of the at least one quantum circuit. The initial state of the nodes can be defined by a suitable Ansatz for the at least one quantum circuit, and the at least one quantum circuit is executed to determine transitions of states of the nodes as the model is temporally progressed in its simulation.

In some implementations, the hidden Markov model **120** shown in FIG. 12 may be configured, or trained, using data obtained from observing the real physical system **160.** The configuration of nodes and arrows can either be explicitly defined by knowledge of a structure of the real physical system **160** and processes occurring therein when in operation, or a computer can be configured to try a range of types of acyclic graph and associated parameters that best provides a fit to observed operation of the real physical system. As described in the foregoing, examples of the present disclosure beneficially use an adversarial approach to training hidden Markov models.

From the models, for example hidden Markov models, it can be feasible to determine inferences regarding an operating status of the real physical system **160,** and also make inferences regarding how to control the real physical system **160.** From the foregoing, it will be appreciated that two variational inference (VI) methods as described in the foregoing may be used in various implementations of the present disclosure. In some cases, by implementing the VI methods using the Born machine hosted on the quantum computer **30,** highly expressive posteriors can be given by using Bayesian network models, for example hidden Markov models (HMMs), that more accurately represent what is occurring in the real physical system.

In some examples, the first VI method used can be based on minimizing the Kullback-Leibler (KL) divergence of the true posterior and relies on a classifier that estimates probability ratios; the resulting adversarial training may be challenging due to there being a large number of hyper-parameters and stability issues. Conversely, the first method requires an ability to (i) sample from the prior $p(z)$,

(ii) sample from the Born machine $q_q$ (zlx), and
(iii) calculate the likelihood $p(x|z)$.

In some cases, the method may be applied even when the prior is implicit (for example, as in a quantum-assisted Helmholtz machine). Alternatively or additionally, the second VI method used can be based on a kernelized Stein discrepancy (KSD). In some cases, the second method can be limited by the requirement of having explicit priors and likelihoods. Advantageously, the second method may provide plenty of flexibility in the choice of kernel. Beneficially, a generic Hamming kernel is used to compute similarities between bit-strings.

In some cases, the real physical system **160** can be: a self-diving vehicle, an aircraft, an airport facility, a robotic device, a manufacturing facility, a renewable energy facility, a greenhouse for horticulture, a nuclear power station, an energy storage facility, an electric power grid, an engine, a collection of sensor monitoring the operation of an industrial facility, a financial electronic exchange, a computer network, a question answering system for troubleshooting or medical triage but not limited thereto. In some cases, measured signals from the real physical system **160,** for example derived from one or more sensors or control inputs may be provided to the classical computer **20** and processed by the quantum computing arrangement **10** to generate output signals to control operation of the real physical system **160,** for example via actuators, motors, hydraulic valves, pneumatic valves, and so forth. In some cases, the one or more sensors may include at least one of: optical sensors, gas sensors, pH sensors, cameras, tactile sensors, chemical sensors, temperature sensors, radar imaging sensors, ultrasound imaging sensors, ionizing radiation sensors, optical sensors, inertial navigation sensors (INS), humidity sensors, microphones, switches, joysticks, biosensors, and so forth.

Some examples of the present disclosure optionally use one or more generative models, for example one or more Bayesian network models, or more hidden Markov models (HMMs), for performing variational inference by teaching the one or more Born machine models to represent the real physical system **160** and then interrogating the one or more Born Machine models to derive an inference regarding operation of the real physical system **160** and how to control its operation, for example steering, signaling, engine or electric motor power applied and braking when the real physical system **160** is a self-drive vehicle, infer the real position of a moving vehicle from electromagnetic sensor data such as radar or lidar, suggest more likely informative next steps in a clinical journey following triage and test results, identify causes for an abnormal readings from the sensors of a mechanical apparatus, identifying abnormal workloads and usages that could be signalling cyberattacks in a computer network.

In some implementations, the Born machine models can be used in a control arrangement **150**. In FIG. 11, there is provided an illustration of an example of a control arrangement that may use a Born machine model. In the example shown, a Bayesian network model arrangement **170** is trained to provide a representation of the real physical system **160**. In some implementations, training data may be acquired from the real physical system **160,** for example by operating the system **160** in all its states under various operating conditions. In some examples, the Bayesian network model arrangement **170** can be implemented in a multilayered manner and may comprise a nested series of models **170(1)** to **170(n)** wherein n is an integer greater than 1. In some cases, the Bayesian network model arrangement **170** (also referred to as model arrangement **170**) may comprise a Hidden Markov Model (HHM) arrangement. In various implementations, the Bayesian network model arrangement **170** may comprise models other than the HHM. In some cases at least one of the models **170(1)** to **170(n)** may be implemented on the quantum computer **30** using a Born machine, for example in a manner as described in the foregoing; such an implementation enables the at least one Bayesian network model arrangement (HHM arrangement) **170** implemented using the Born machine to be especially accurate and expressive. In some examples, at least one of the models **170(1)** to **170(n)** may be implemented on the classical computer **20.** In some examples, the at least one (HHM arrangement) **170** may include at least one hidden Markov model, but is not limited thereto.

In some cases, in the control arrangement **150,** input control data $C_{input}$ is used to manage operation of the real physical system **160** giving rise to corresponding real outputs $C_{out:1}$ to $C_{out:m}$, wherein $m$ is an integer, and also serves as an input to control the hidden Markov model (HMM) arrangement **170**. Simulated outputs $C'_{out:1}$ to $C_{out:m}$ are generated by the HHM arrangement **170** that may generate output data usable for predicting how the real physical system **160** should be functioning. A difference between $C_{out:1}$ to $C_{out:m}$, relative to $C'_{out:1}$ to $C_{out:m}$ is generated by a differential amplifier arrangement **180** to generate one or more error signals $C_E$ that can be used to compensate for deviations in operations of the real physical system **160** (e.g., from a predicted or suggested operation based on the outputs from the HHM arrangement **170).** The error signal $C_E$ provide a useful measure of condition of the real physical system **160,** for example component ageing, component maladjustment, onset of component failure, as well as maintaining operation closely in calibration with the model arrangement **170**. Optionally, a hidden Markov model of the model arrangement **170** is trained to analyze the error signal $C_E$ and diagnose therefrom any potential faults, onset of potential faults and miscalibration of the real physical system **160**. Such insight is extremely valuable when the real physical system **160** is, for example, a nuclear power plant suffering an onset of neutron embrittlement of its critical operating parts, a rechargeable battery system of an electric vehicle, a wind turbine for electricity production, an aircraft system, and so forth.

In the present disclosure, there are a lot of mathematical derivations providing a comprehensive implementation of models, for example hidden Markov models but not limited thereto, using Born machines implemented on quantum computers. It will be appreciated that these models are especially accurate and expressive compared with hidden Markov models implemented solely on classical computers. Moreover, it will be appreciated that the hidden Markov models implemented using quantum computers have a wide range of applications in controlling, monitoring and diagnosing operation of complex real physical systems and are therefore capable of providing highly beneficial technical effect.

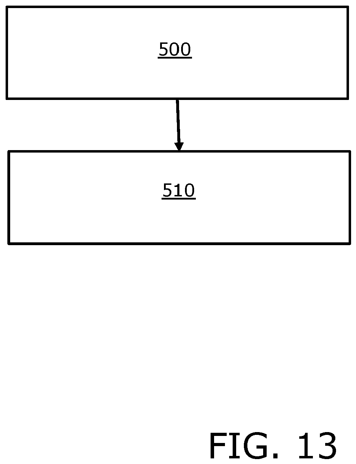

Referring next to FIG. 13, there is shown a flow chart of steps of a method pursuant to the present disclosure.

There is provided an example method of using the control arrangement **150** for controlling or monitoring the real physical system **160,** wherein, in some implementations, the method may include:

(i) a first step **500** of arranging for the control arrangement **150** to include a hybrid combination of the classical computer **20** and the quantum computer **30,** wherein the control arrangement **150** is configured to receive input data (e.g., $C_{nput}$) at the classical computer **20** from the real physical system **160,** wherein the classical computer **20** and the quantum computer **30** are configured to exchange data therebetween, and to use a variational inference arrangement executed on the hybrid combination to process the input data to generate corresponding output data from the classical computer **20** for use in controlling or monitoring operation of the real physical system **160;** and

(ii) a second step **510** of using the variational inference arrangement implemented at least in part by using at least one model arrangement **170,** for example including at least one hidden Markov model arrangement, implemented using a Born machine implemented using the quantum computer **30** to generate one or more inferences regarding an operating condition of the real physical system **160.**

The classical computer **20** can also be referred to as being a "conventional computer". Moreover, the control arrangement **150** can also be referred to as being a "control system".

In some cases, the method of using the control arrangement **150** includes arranging for at least one model arrangement **170** to include a nested series of models, wherein at least one of the series of models is implemented using the quantum computer **30.** Optionally, the at least one model arrangement **170** includes at least one hidden Markov model arrangement.

In some cases, the method includes configuring at least one model of the variational inference arrangement to be taught by using an objective function for at least one of:

(i) minimising a Kullback-Leibler (KL) divergence of a true posterior and relying on a classifier that estimated a probability ratio; and
(ii) teaching using a kernelized Stein discrepancy (KSD) requiring explicit priors and likelihoods.

In some cases, the method includes configuring the control arrangement **150** to infer an operating condition of the real physical system **160** from an error signal used to compensate for deviations in operation of the real physical system **160** relative to a learnt representation of the real physical system **160,** wherein the learnt representation of the real physical system **160** is implemented using the at least one model arrangement **170,** for example a hidden Markov model arrangement, that is at least partially implemented using the quantum computer **30.**

In some implementations, when a nested series of models is used, for example first, second and third models (for example hidden Markov models HMMs):

(i) the first model **170(1)** is trained to process sensor signals, for example for noise reduction and filter out extraneous effects (wherein the first model **170(1)** can be implemented on the classical computer **20);**
(ii) the second model **170(2)** is trained to make decisions based on filtered sensor signals provided from the first model **170(1)** together with user command signals (wherein the second model **170(2)** is implemented using the quantum computer 30, to achieve enhanced accuracy); and
(iii) the third model **170(3)** is trained to generate output signals for driver the real physical system 160 (wherein the third model **170(2)** can be implemented on the classical computer **20).**

In the case of a self-driving vehicle:

(a) the first model **170(1)** is trained to interpret sensor signals such as dashboard camera, ultrasonic proximity sensors, temperature sensor, humidity sensor;
(b) the second model **170(2)** is trained to make decisions regarding driving direction, braking, acceleration, steering, indicating; and
(c) the third model **170(3)** is trained to generate commands for the vehicle (for example, braking signals, motor drive signals, indicator light signals) that take into account road surface condition (e.g. wet, ice, snow, loose gravel), engine/motor power, battery power, road incline.

In other words, there is used:

(i) a first group of models in the series for filtering input data,
(ii) a second (middle) group in the series for making strategic inference and decisions, based on outputs from the first group, and
(iii) a third group of models in the series for receiving results from the second group, and for converting these results for output control purposes. "Group" here in (i) to (iii) denotes "one or more".

Beneficially, by using nested models, each model can become specialized at performing its specialized function, so the models in synergy provide a superlative vehicle control and driving accuracy. Such a manner of configuring the nested series of models is application to other use applications, for example aircraft navigation and flight control, rocket flight control, ship navigation, robotics, manufacturing machinery control, chemical processing works control, and so forth.

It will be understood that the above description is given by way of example only and that various modifications may be made by those skilled in the art. The above specification, examples, and data provide a complete description of the structure and use of exemplary implementations. Although various examples have been described above with a certain degree of particularity, or with reference to one or more individual implementations, those skilled in the art could make numerous alterations to the disclosed examples without departing from the scope of this specification.

Example control system utilizing variational inference

In some implementations, a control system may be configured to control a real physical system (e.g., the real physical system **160**). In some cases, the control system may determine inferences regarding an operating status of the real physical system **160,** make inferences regarding how to control the real physical system **160,** and provide feedbacks to the real physical system based at least in part on the determined inferences.

In some implementations, the control system may comprise a computing arrangement or system (e.g., the computing arrangement **10)** that includes a hybrid combination of classical computers (also referred to as classic computers) and the quantum computers that are in communication with each other (e.g., the classic computer **20** and the quantum computer **30).**

In some cases, the classical computer may include a non-transitory memory configured to store specific computer-executable instructions and a hardware processor (e.g., an electronic processor) in communication with the non-transitory memory. In some examples, the quantum computer may include one or more qubits and one or more quantum gates configured to act on the one or more qubits. In some implementations, the quantum computer can be in communication with the classical computer via one or more communication links or via an interface. In some examples, the classical computer may execute instructions associated with a quantum compiling algorithm to compile output data generated by the classical computer to data and commands usable to configure the quantum computer and execute a quantum algorithm using one or more quantum circuits. In various implementations, the classical computer and the quantum computer can be included in different enclosures and communicate via a wired or wireless link. In some cases, the classical computer can be part of a distributed computing system (e.g., a cloud computing system).

In some examples, the control system may use a variational inference (VI) method and implement the VI method, at least partially, using a Born machine hosted on the quantum computer. In some cases, the Born machine may be implemented using parameterized quantum circuits. In some cases, the parameterized quantum circuits may function as quantum machine learning models. In some cases, the VI method may comprise one or more Bayesian network models (e.g., hidden Markov models or HMMs). In some such cases, the Bayesian network models may comprise a nested series of models (e.g., a nested series of HHMs).

In some examples, the implementation of a VI method by the control system may comprise teaching a Born machine model to represent the real physical system and then interrogating the Born Machine model to derive an inference regarding operation of the real physical system and how to control its operation.

FIG. 14 is a flow diagram illustrating an example method that may be used by a control system (e.g., control arrangement **150)** to control the operation of a real physical system (e.g., the real physical system **160).**

The process **1400** begins at block **1402** where the control system receives input data (e.g., data usable for managing operation of the real physical system) from a data source. In some cases, the data source can be a user interface of the control system (e.g., a user interface of the classical computer). In some cases, the data source may include a memory (e.g., a non-transitory memory of the real physical system, the control system or that of a computing system different from control system), or a sensor arrangement (e.g., a sensor arrangement associated with the real physical system) that is configured to generate and stream sensor data. In some examples, the data source can be in communication with the control system via a wireless network. In some examples, the control system may receive the input data via the classical computer included in its computing system. In some cases, input data may be derived from the real physical system.

At block **1404,** the control system may provide the input data to a variational inference arrangement to generate output data. The output data may comprise one or more inferences regarding an operating condition of the real physical system. In some cases, the variational inference arrangement may be included in the computing system of the control system and may comprise one or more Bayesian network models (e.g., one or more HMMs). In some examples, the Bayesian network models may be implemented using a combination of the classical computers and the quantum computers. In some cases, the variational inference arrangement includes at least Born machine implemented on the quantum computer. In some implementations, the variational inference arrangement may generate the output data by executing instructions stored on a memory of the classical computer and performing quantum computing operations using one or more quantum circuits of the quantum computer. In some cases, quantum computing operation may include quantum computing using the Born machine configured in the quantum computer. In some implementations, at least one of the one or more Bayesian network models can be a trained model configured to provide a representation of the real physical system. In some examples, Bayesian network model may have been trained using training data acquired from the real physical system (e.g., by operating the system in all its states under various operating conditions). In some cases, at least one of the one or more Bayesian network models can be trained by using an objective function. In cases, the training may comprise minimizing a Kullback-Leibler (KL) divergence of a true posterior and relying on a classifier that estimated a probability ratio. In some cases, the training may comprise using a kernelized Stein discrepancy (KSD) requiring explicit priors and likelihoods. In some cases, the Born machine can be a trained Born machine. For example, the Born machine may have been trained before receiving the input data using the methods described above. In some cases, a trained Bayesian network model may comprise a trained Born machine.

At block **1406,** the control system may receive system output data from the real physical system that is controlled by the control system. In some cases, the real physical system may generate the system output data using system input data. In some cases, system input data may comprise the input data provided to the control system at block **1402.**

At block **1408,** the control system may use the system output data and output data generated using the variational inference arrangement to generate an error signal. In some cases, the control system may generate the error signal by feeding the system output data and output data, or one or more signals associated with system output data and output data, to a differential amplifier. In some cases, the error signal may comprise a difference between the output data generated by the variational inference arrangement and system output data generated by the real physical system. In some cases, the error signal may provide a measure of a condition of the real physical system, for example component ageing, component maladjustment, or onset of component failure. In some cases, one of the more Bayesian network models (e.g., a hidden Markov model) implemented by the control system may be configured or trained to analyze the error signal and generate data usable for diagnosing potential faults, onset of potential faults, and miscalibration of the real physical system.

At block **1410,** the control system may feed the error signal to an input of the real physical system use the system output data and output data generated using the variational inference arrangement to generate an error signal.

In some examples, at least a portion of the operations described with respect to the process **1400** may be performed by a processor of the control system (e.g., a processor of the classical computer). In some examples, at least a portion of the operations described with respect to block **1404** be performed by the quantum computer. In some examples, the processes performed by the quantum computer may be managed and controlled by a controller of the quantum computer based at least in part data received from eth classical computer. In some cases, the controller of the quantum computer may include a hardware processor and a non-transitory memory storing computer-executable instructions different from that of the classical computer. In some cases, the controller of the quantum computer may use the computer-executable instructions to configure the variational inference arrangement, e.g., by configuring a Born machine. In some cases, configuring the Born machine may comprise preparing quantum states and quantum circuits.

In some implementation, the qubits may comprise photons and having photonic states and the quantum gates may comprise photonic components configured to control and manipulate the photonic states.

Terminology

Modifications to example implementations of the present disclosure described in the foregoing are possible without departing from the scope of the present disclosure as defined by the accompanying claims. Expressions such as "including", "comprising", "incorporating", "consisting of', "have", "is" used to describe and claim the present invention are intended to be construed in a non-exclusive manner, namely allowing for items, components or elements not explicitly described also to be present. Reference to the singular is also to be construed to relate to the plural; as an example, "at least one of" indicates "one of' in an example, and "a plurality of" in another example; moreover, "one or more" is to be construed in a likewise manner.

The phrases "in an implementation", "according to an example" and the like generally mean the particular feature, structure, or characteristic following the phrase is included in at least one possible implementation of the present disclosure, and may be included in more than one implementation of the present disclosure. Importantly, such phrases do not necessarily refer to the same implementation.

The term "computer" or "computing-based device" is used herein to refer to any device with processing capability such that it executes instructions. Those skilled in the art will realize that such processing capabilities are incorporated into many different devices and therefore the terms "computer" and "computing-based device" each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible, non-transitory storage medium, e.g., in the form of a computer program comprising computer program code adapted to perform the operations of one or more of the methods described herein when the program is run on a computer and where the computer program may be embodied on a non-transitory computer readable medium. The software is suitable for execution on a parallel processor or a serial processor such that the method operations may be carried out in any suitable order, or simultaneously.

This acknowledges that software is a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one example implementation or may relate to several implementations. The range of possible implementations are not limited to those that solve any or all of the stated problems or those that have any or all of the stated benefits and advantages. No single feature or group of features is necessary or indispensable to every implementation.

Conditional language used herein, such as, among others, "can," "could," "might," "may," "e.g.," and the like, unless specifically stated otherwise, or otherwise understood within the context as used, is generally intended to convey that certain implementations include, while other implementations do not include, certain features, elements and/or steps. Thus, such conditional language is not generally intended to imply that features, elements, and/or steps are in any way required for one or more implementations or that one or more implementations necessarily include logic for deciding, with or without author input or prompting, whether these features, elements, and/or steps are included or are to be performed in any particular implementation. The terms "comprising," "including," "having," and the like are synonymous and are used inclusively, in an open-ended fashion, and do not exclude additional elements, features, acts, operations, blocks, and so forth. Also, the term "or" is used in its inclusive sense (and not in its exclusive sense) so that when used, for example, to connect a list of elements, the term "or" means one, some, or all of the elements in the list. In addition, the articles "a," "an," and "the" as used in this application and the appended claims are to be construed to mean "one or more" or "at least one" unless specified otherwise.

As used herein, a phrase referring to "at least one of" a list of items refers to any combination of those items, including single members. As an example, "at least one of: A, B, or C" is intended to cover: A; B; C; A and B; A and C; B and C; and A, B, and C. Conjunctive language such as the phrase "at least one of X, Y, and Z," unless specifically stated otherwise, is otherwise understood with the context as used in general to convey that an item, term, etc. may be at least one of X, Y, or Z. Thus, such conjunctive language is not generally intended to imply that certain implementations require at least one of X, at least one of Y, and at least one of Z to each be present.

The operations of the methods described herein may be carried out in any suitable order, or simultaneously where appropriate. Additionally, individual blocks may be deleted from, combined with other blocks, or rearranged in any of the methods without departing from the scope of the subject matter described herein. Aspects of any of the examples described above may be combined with aspects of any of the other examples described to form further examples without losing the effect sought.

It will be understood that the above description is given by way of example only and that various modifications may be made by those skilled in the art. The above specification, examples, and data provide a complete description of the structure and use of exemplary implementations. Although various example implementations have been described above with a certain degree of particularity, or with reference to one or more individual implementations, those skilled in the art could make numerous alterations to the disclosed implementations without departing from the scope of this specification.

## APPENDIX

Reference is made to a research paper "Variational inference with a quantum computer" that is hereby incorporated by reference; the research paper is available in Physical Review Applied 16, 044057 (2021) accessible at
https://journals.aps.org/prapplied/pdf/10.1103/PhysRevApplied. 16.044057

### APPENDIX A: Gradients for the aforesaid adversarial method

Reference is made to APPENDIX B: *"Gradients for the adversarial method"* as published in the aforesaid research paper *"Variational inference with a quantum computer".*

### APPENDIX B: The Stein operator

Reference is made to APPENDIX C: *"The Stein Operator"* as published in the aforesaid research paper *"Variational inference with a quantum computer".*

### APPENDIX C: Gradients for the kernelized method

Reference is made to APPENDIX D: *"Gradients for the kernelized method"* as published in the aforesaid research paper *"Variational inference with a quantum computer".*

### APPENDIX D: Probability table for a "lung cancer" network

Reference is made to APPENDIX F: *"Probability table for the "lung cancer" network"* as published in the aforesaid research paper *"Variational inference with a quantum computer".*

### APPENDIX E: Learning curves for the adversarial method

Reference is made to APPENDIX E: "Learning curves for the adversarial method" as published in the aforesaid research paper *"Variational inference with a quantum computer".*

### ANNEX F: Earlier general publications

General scientific publications are provided at the end of the aforesaid research paper *"Variational inference with a quantum computer".*

### Embodiments

A number of embodiments are described below by way of example.

Described is an example control system for controlling or monitoring a real physical system, wherein the control system comprises a hybrid combination of a classical computer and a quantum computer, wherein the control system is configured to receive input data at the classical computer from the real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system, wherein the variational inference arrangement is implemented at least in part by using at least one Bayesian network model arrangement implemented using a Born machine implemented using the quantum computer.

In a specific example, the at least one Bayesian network model arrangement comprises a nested series of models, wherein at least one of the series of models is implemented using the quantum computer.

In a specific example, the models of the series of models are mutually different, and are specialized to perform corresponding specialized variational inference functions.

In another specific example of the control system, the nested series of models comprises a nested series of hidden Markov models.

In an example control system, at least one Bayesian network model arrangement of the variational inference arrangement is configured to be taught by using an objective function for at least one of:

(i) minimizing a Kullback-Leibler (KL) divergence of a true posterior and relying on a classifier that estimated a probability ratio; and
(ii) teaching using a kernelized Stein discrepancy (KSD) requiring explicit priors and likelihoods.

An example control system is configured to infer an operating condition of the real physical system from an error signal used to compensate for deviations in operation of the real physical system relative to a learnt representation of the real physical system, wherein the learnt representation of the real physical system is implemented using the at least one Bayesian network model arrangement that is at least partially implemented using the quantum computer.

Described is an example method of using a control system for controlling or monitoring a real physical system (160), wherein the method comprises:

(i) arranging for the control system to include a hybrid combination of a classical computer and a quantum computer, wherein the control system is configured to receive input data at the classical computer from a real physical system, wherein the classical computer and the quantum computer are configured to exchange data therebetween, and to use a variational inference arrangement executed on the hybrid combination to process the input data to generate corresponding output data from the classical computer for use in controlling or monitoring operation of the real physical system; and

(ii) using the variational inference arrangement implemented at least in part by using at least one Bayesian network model arrangement implemented using a Born machine implemented using the quantum computer to generate one or more inferences regarding an operating condition of the real physical system.

In an example, the method comprises arranging for the at least one Bayesian network model arrangement to include a nested series of models, wherein at least one of the series of models is implemented using the quantum computer.

In a specific example, the method comprises implementing the models of the series of models to be mutually different, and to be specialized to perform corresponding specialized variational inference functions.

In an example control system, the models of the series of models are mutually different, and are specialized to perform corresponding specialized variational inference functions. In a specific example, the nested series of models is implemented as a nested series of hidden Markov models.

In an example method:

(i) a first group of models in the series is used for filtering input data,

(ii) a second group of models in the series is used for making strategic inference decisions, based on outputs from the first group, and

(iii) a third group of models in the series is used for receiving results from the second group, and for converting these results for output control purposes.

An example method comprises configuring at least one model of the variational inference arrangement to be taught by using an objective function for at least one of:

(i) minimizing a Kullback-Leibler (KL) divergence of a true posterior and relying on a classifier that estimated a probability ratio; and

(ii) teaching using a kernelized Stein discrepancy (KSD) requiring explicit priors and likelihoods.

An example method comprises configuring the control system to infer an operating condition of the real physical system from an error signal used to compensate for deviations in operation of the real physical system relative to a learnt representation of the real physical system, wherein the learnt representation of the real physical system is implemented using the at least one Bayesian network model arrangement that is at least partially implemented using the quantum computer.

A machine-readable data storage medium comprises specific instructions that are executable on data processing hardware, wherein the instructions, when executed by the data processing hardware, implement a method as described above.

**Claims**

1. A control system (150), wherein the control system comprises a hybrid combination of a classical computer (20) and a quantum computer (30), wherein the control system is configured to receive input data at the classical computer from a data source, wherein the classical computer and the quantum computer are configured to exchange data therebetween, and to use a variational inference arrangement implemented using at least one probabilistic graphical model (110, 120) executed on the hybrid combination, wherein the at least one probabilistic graphical model is used to process the input data to generate corresponding output data from the classical computer for use in controlling operation of an apparatus, wherein an approximate posterior distribution of unobserved discrete variables of the at least one probabilistic graphical model is inferred using a Born machine (100) implemented using the quantum computer, wherein qubits of a quantum circuit in the quantum computer are configured to represent nodes (N1-N6) of the probabilistic graphical model (120) and the quantum circuit is executed to determine transitions of states of the nodes.

2. The control system of claim 1, wherein transitions of states of the nodes are represented by links between the nodes indicating transitions between physical operating states of a real physical system

3. The control system of claim 1, wherein the at least one probabilistic graphical model (110, 120) comprises a nested series of models (170(1)-170(n)), wherein at least one of the series of models is implemented using the quantum computer (30).

4. The control system of claim 3, wherein the models of the series of models (170(1)-170(n)) are mutually different and are specialized to perform a corresponding specialized function for controlling and monitoring the apparatus.

5. The control system of claim 3, wherein the nested series of models (170(1)-170(n)) comprises a nested series of hidden Markov models.

6. The control system of claim 5, wherein a first hidden Markov model of the nested series of models (170(1)-170(n)) is trained to process sensor signals of a sensor in the apparatus and a second hidden Markov model is trained to make decisions based on the processed senor signals received from the first hidden Markov model.

7. The control system of claim 6, wherein a first hidden Markov model is implemented on the classical computer and the second hidden Markov model is implemented using the quantum computer.

8. The control system of any one of the preceding claims, wherein the at least one probabilistic graphical model (110,120) of the variational inference arrangement is taught by minimizing at least one of:

    (i) a Kullback-Leibler (KL) divergence of the true posterior of the probabilistic graphical model relative to the approximate posterior distribution and relying on a classifier that estimated a probability ratio between the approximate posterior distribution and the prior; and
    (ii) a kernelized Stein discrepancy (KSD) between the approximate and true posterior distributions, the KSD requiring explicit priors and likelihoods.

9. The control system of any one of the preceding claims, wherein the data source comprises a user interface of the control system, a non-transitory memory of the apparatus, or a sensor arrangement of the apparatus.

10. The control system of claim 1, wherein the probabilistic graphical model is trained using training data acquired from the apparatus.

11. The control system of claim 8, wherein the probabilistic graphical model comprise a hidden Markov model.

12. A method of using a control system for controlling an apparatus, wherein the method comprises:

    (i) arranging (500) for the control system to include a hybrid combination of a classical computer (20) and a quantum computer (30), wherein the control system is configured to receive input data at the classical computer from a data source, wherein the classical computer and the quantum computer are configured to exchange data therebetween, and to use a variational inference arrangement implemented using at least one probabilistic graphical model (110, 120) executed on the hybrid combination, wherein the at least one probabilistic graphical model is used to process the input data to generate corresponding output data from the classical computer for use in controlling operation of an apparatus (160); and
    (ii) using (510) the variational inference arrangement implemented using at least one probabilistic graphical model (110, 120) to generate one or more inferences regarding an operating condition of the apparatus, wherein an approximate posterior distribution of unobserved discrete variables of the at least one probabilistic graphical model is inferred using a Born machine (100) implemented using the quantum computer, wherein qubits of a quantum circuit in the quantum computer are configured to represent nodes (N1-N6) of the probabilistic graphical model (120) and the quantum circuit is executed to determine transitions of states of the nodes.

13. The method of claim 12, wherein the method comprises arranging for the at least one probabilistic graphical model (110, 120) to include a nested series of models(170(1)-170(n)), wherein at least one of the series of models is implemented using the quantum computer.

14. The method of claim 13, wherein the models of the series of models (170(1)-170(n)) are mutually different, and are specialized to perform corresponding specialized function for controlling and monitoring the apparatus.

15. The method of claim 13, wherein the nested series of models (170(1)-170(n)) is implemented as a nested series of hidden Markov models.

16. The method of any one of claims 13 to 15, wherein:

(i) a first group of models in the series is used for filtering input data,
(ii) a second group of models in the series is used for making strategic inference decisions, based on outputs from the first group, and
(iii) a third group of models in the series is used for receiving results from the second group, and for converting these results for output control purposes.

17. The method of any one of claims 12 to 16, wherein the method comprises configuring the at least one model of the variational inference arrangement to be taught by minimizing at least one of:

(i) a Kullback-Leibler (KL) divergence of the true posterior of the probabilistic graphical model relative to the approximate posterior distribution and relying on a classifier that estimated a probability ratio between the approximate posterior distribution and the prior; and
(ii) a kernelized Stein discrepancy (KSD) between the approximate and true posterior distributions, the KSD requiring explicit priors and likelihoods.

18. The method of any one of claims 12 to 17, wherein the method comprises configuring the control system to infer an operating condition of the apparatus (160) from an error signal used to compensate for deviations in operation of the apparatus relative to a learnt representation of the apparatus, wherein the learnt representation of the apparatus is implemented using the probabilistic graphical model (110,120) of the variational inference arrangement wherein the error signal is generated by determining a difference between the output data generated by the variational inference arrangement and system output data generated by the apparatus, and wherein the error signal provides a measure of the condition of the apparatus.

19. A machine-readable data storage medium comprising instructions which, when the instructions are executed by a control system that includes a hybrid combination of a classical computer and quantum computer, cause the control system to perform the method of any one of claims 12 to 18.

(a) 'Sprinkler' network

(b) Regime switching in time series

(c) 'Lung cancer' network [47].

(d) Error correction codes

FIG. 1

FIG. 2

Updated $\phi$ for odds $\propto q_\theta(z|x)/p(z)$

① Optimize classifier ② Optimize Born machine

$d_\phi$

vary $\phi$

vary $\theta$ True $\propto p(x|z)$

Born

Prior Born
Samples Odds distribution

Updated $\theta$ for Born machine

FIG. 3

**Kernel space**
**Minimize average distance**

$$\|\mu_q - \mu_p\|_{\mathcal{H}}^2 = \|\mu_q\|_{\mathcal{H}}^2 = \text{KSD}^2$$

$\mathcal{H}$

$$\mu_p = \mathbb{E}_y[\kappa_p(y, \cdot)] \equiv 0$$

$$\mu_q = \mathbb{E}_z[\kappa_p(z, \cdot)]$$

$\kappa_p$

$\kappa_p$

**Posterior samples**

$z'$  Born

$y'$  True  unknown

$z \sim q_\theta(z|x)$

$y \sim p(z|x)$

FIG. 4

FIG. 5

(a) Adversarial objective

(b) Kernelized Stein objective

FIG. 6

FIG. 7

FIG. 8

(a) Successful example

(b) Unsuccessful example

FIG. 9

Binary data
memory 60

Ansatz
configuration
module 70

Binary
processor
arrangement
50

Qubits 80

Born
machine
100

Classic
computer
20

Qubit
measuring
arrangement
90

Hidden
Markov
model
110

Input/output
interface 40

Quantum
computer
30

Computing
Arrangement 10

$D_{input}$   $D_{output}$

FIG. 10

FIG. 11

Outputs

Input control
parameters

Environmental
variables

Real physical
systen

FIG. 12

500

510

FIG. 13

**REFERENCES CITED IN THE DESCRIPTION**

**Non-patent literature cited in the description**

- Variational inference with a quantum computer. *Physical Review Applied*, 2021, vol. 16, 044057, https://journals.aps.org/prapplied/pdf/10.1103/PhysRevApplied.16.044057